# EUROPEAN PATENT APPLICATION

(11) **EP 4 202 652 A1**
(43) Date of publication of application: **28.06.2023**
(21) Application number: 22205225.0
(22) Date of filing: 03.11.2022
(51) Int. Cl.: G06F 9/30, G06F 9/38

(54) **DEVICE, METHOD AND SYSTEM TO PROVIDE A PREDICTED VALUE WITH A SEQUENCE OF MICRO-OPERATIONS**

(30) Priority: 21.12.2021 US 202117558368
(71) Applicant: INTEL Corporation, Santa Clara, CA 95054 (US)
(72) Inventor: Shwartsman, Stanislav, 35849 Haifa (IL); Shtiegmann, Elad, 44375 Kefar Sava (IL); Bandishte, Sumeet, 452001 Indore (IN); Rappoport, Lihu, 34657 Haifa (IL); Sperber, Zeev, 3092832 Zichron Yackov (IL); Gaur, Jayesh, 560066 Bangalore (IN)
(74) Representative: Goddar, Heinz J.

(57) **Abstract**

Techniques and mechanisms for efficiently making value prediction information available for use by in a processor. In an embodiment, the instruction execution is to include a loading of some data to a first location (e.g., a first register). A decoder of the processor accesses reference information which indicates that the execution is to comprise multiple micro-operations (µops) including a LoadCheck µop and a Move µop. The LoadCheck µop loads a first value to the first location, and checks whether the loaded first value is the same as a previously-determined second value which represents a prediction of what the first value would be. The Move µop moves the second value to the first location. In another embodiment, the Move µop is scheduled for execution out-of-order with respect to the LoadCheck µοp, resulting in an early availability of the second value for access in a register file by another µop.

## Description

### BACKGROUND

### 1. Technical Field

This disclosure generally relates to processor functionality and more particularly, but not exclusively, to the provisioning of a predicted value for use in the execution of a micro-operation.

### 2. Background Art

Value prediction is one technique which is used to mitigate a frequent bottleneck in the use of existing processors - i.e., insufficient instruction level parallelism (ILP). Value prediction increases ILP of a program by breaking true data dependencies and improves overall performance. However, most modern processors do not implement value prediction because of the complexity involved in its implementation. Some common problems with value prediction include insufficient access to a register file (RF), and the need for a multi-ported value prediction table that needs to be looked up for every Load instruction. Typically, a RF needs to be supplemented with additional hardware to communicate predicted values to a future consumer instruction, and to check the predicted value against the actual value. Such modifications tend to increase the complexity and criticality of RF access. Additionally, value prediction functionality requires costly area in silicon to provide storage of predicted data, and also to provide a multi-ported value prediction table.

As successive generations of processor architectures continue to increase in number, variety, and capability, there is expected to be an increasing premium placed on improvements to the efficiency of functionalities such as value prediction.

### BRIEF DESCRIPTION OF THE DRAWINGS

The various embodiments of the present invention are illustrated by way of example, and not by way of limitation, in the figures of the accompanying drawings and in which:
FIGs. 1A, 1B show functional block diagrams each illustrating respective features of a system to provide value prediction information according to an embodiment.
FIG. 1C shows a mapping diagram illustrating features of a conversion to provide a sequence of micro-operations according to an embodiment.
FIGs. 2 through 4 show flow diagrams each illustrating features of a respective method to facilitate an execution of micro-operations according to an embodiment.
FIG. 5 shows a functional block diagram illustrating features of a device to provide value prediction information according to an embodiment.
FIGs. 6A through 6B are block diagrams illustrating a generic vector friendly instruction format and instruction templates thereof according to an embodiment.
FIGs. 7A through 7D are block diagrams illustrating an exemplary specific vector friendly instruction format according to an embodiment.
FIG. 8 is a block diagram of a register architecture according to one embodiment of the invention.
FIG. 9A is a block diagram illustrating both an exemplary in-order pipeline and an exemplary register renaming, out-of-order issue/execution pipeline according to an embodiment.
FIG. 9B is a block diagram illustrating both an exemplary embodiment of an in-order architecture core and an exemplary register renaming, out-of-order issue/execution architecture core to be included in a processor according to an embodiment.
FIGs. 10A through 10B illustrate a block diagram of a more specific exemplary in-order core architecture, which core would be one of several logic blocks (including other cores of the same type and/or different types) in a chip.
FIG. 11 is a block diagram of a processor that may have more than one core, may have an integrated memory controller, and may have integrated graphics according to an embodiment.
FIGs. 12 through 15 are block diagrams of exemplary computer architectures.
FIG. 16 is a block diagram contrasting the use of a software instruction converter to convert binary instructions in a source instruction set to binary instructions in a target instruction set according to an embodiment.

### DETAILED DESCRIPTION

Embodiments discussed herein variously provide techniques and mechanisms for efficiently making value prediction information available for use in a processor. The technologies described herein may be implemented in one or more electronic devices. Nonlimiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices which include or are coupled to operate with a processor, controller, or other circuitry which is suitable to execute a sequence of micro-operations.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Some existing value prediction technologies rely on extra ports with which predicted values are to be variously written to a RF based on a micro-operation (also referred to herein as a "micro-op," or "µop,") which is provided to an out-of-order (OOO) execution unit. Such a predicted value is then available in the RF for future dependents of the load. The predicted value is typically supplied using a multi-ported valued prediction table, that is looked up at allocation. These existing value prediction technologies also operate on the premise that when a load µop (for example) completes execution, the predicted value is to be read from the RF and validated against the actual value instantaneously. The effectiveness of such an operation tends to rely on an RF being accessible with a large number of read ports. The reliance of these existing technologies on a large number of RF ports tends to impose limits on the timing, area and power characteristics of a processor.

To facilitate the efficient running of an operating system, application or other such software process, some embodiments variously provide, access, execute and/or otherwise operate based on information which specifies or otherwise indicates that multiple µops are to be performed by a processor as part of the execution of an instruction. The indicated µops are to comprise some first µop of a first µop type (referred to herein as a "LoadCheck" µop type), as well as some second µop of a second µop type (referred to herein as a "Move" µop type).

As used herein, "LoadCheck," "LoadCheck µορ," "LoadCheck type," and related terms variously refer to a µop type (or a specific µop which is of that type) which is to perform both a load of data to an identified location, and to further perform a check as to whether a value of the data, once it is loaded or otherwise identified, is equal to a corresponding predicted value. In an embodiment, such a check (referred to herein as a "validity check") is to determine a validity condition of the predicted value - i.e., wherein the validity condition is one of a "valid" condition or an "invalid" condition. For example, a predicted data value is determined to be "valid" where is it equal to the actual value (also referred to herein as the "architectural value") of the corresponding data for which the prediction was made. By contrast, the predicted data value is determined to be "invalid" where it differs from the architectural value of the corresponding data.

As used herein, "Move," "Move µop," "Move type," and related terms variously refer to a µop type (or a specific µop which is of that type) which is to move a value to an identified location. In an illustrative scenario according to some embodiments, a Move µop is to move to an identified register a value which represents a predicted value of data which is to be loaded by a LoadCheck µop. In some embodiments, the Move µop belongs - more particularly - to what is commonly referred to as a "Move Immediate" µop type. Such a µop type expedites the moving of data to a destination - e.g., by encoding an immediate data value into the µop op-code itself. It is noted that a LoadCheck µop type is to be distinguished, for example, from another µop type - referred to herein as a "Load" µop type - which is similarly to perform a data load, but which does not perform any validity check based on a predicted value (if any) of the loaded data.

In an embodiment, the indicated µops are listed or otherwise identified as being in a particular sequence with each other. However, the relative order in which said µops are actually performed is subject to being different than the sequence - e.g., due to out-of-order (OOO) execution by a processor. By way of illustration and not limitation, a LoadCheck µop (as compared to a Move µop) is an earlier µop in a µop sequence - e.g., wherein the Move µop is a next µop in the sequence after the LoadCheck µop. In one such embodiment, the µop sequence determines that the Move µop is to move a predicted value of data which is the subject of the earlier-in-sequence LoadCheck µop. However, the validity check to be performed with the LoadCheck µop depends upon (and waits for) a completion of the data load for that LoadCheck µop, for example. By contrast, performance of Move µop the does not need to wait due to any similar dependency.

Therefore, some embodiments facilitate the performance of such a Move µop - out-of-order - before performance of the LoadCheck µop has completed (or, for example, even begun). In some embodiments, a scheduling of this relatively early performance of the Move µop results in the predicted data value being available in a register file (RF) sooner than it would otherwise be provided using a Load µop according to conventional techniques. As a result, the predicted data value is accessible, via the RF, for earlier use by a "consumer" µop (if any) that might want to use the predicted data value. If the predicted data value is subsequently determined to be invalid - e.g., upon completion of the LoadCheck µop - then some embodiments flush some or all execution state of a processor and perform recovery operations that (for example) are adapted from conventional techniques for speculative execution.

Some embodiments variously provide and/or otherwise use a complete specification of multiple µops comprising a LoadCheck µop and a Move µop - e.g., by providing information which specifies a sequence of the µops, the µop types of said µops, and the respective operands of each such µop. Such information is generated, for example, with a decoder unit and/or an execution unit of a processor.

Other embodiments provide information which indicates multiple µops with only a partial specification thereof - e.g., by providing information which specifies (for example) the respective µop types of the µops, and which specifies that the subject of a Move µop is to be a predicted value of data which is to be the subject of an earlier-in-sequence Load µop. For example, this information is to be subsequently supplemented or otherwise modified - e.g., based on one or more operands of an instruction which is to be decoded and/or otherwise processed - to generate a complete specification of the multiple µops to be performed.

In some embodiments, a partial specification of multiple µops is provided in a processor as reference information which a decoder unit and/or other suitable processor circuitry identifies as being associated with a particular instruction type. In one such embodiment, decoding an instruction of that instruction type comprises the processor circuitry accessing, and supplementing (or otherwise modifying) the reference information - or a copy thereof - to generate a complete specification of the multiple µops. For example, such reference information is to be used as a type of information which is commonly referred to as "pre-decoded" instruction information - i.e., information which is determined prior to the receiving of a particular instruction, but which in generated based on an instruction type of the instruction (e.g., based on an earlier instruction of that same instruction type).

Some embodiments additionally or alternatively generate the above-described reference information - e.g., for subsequent provisioning to a processor or other suitable device. In one such embodiment, a compiler, assembler or other suitable logic (e.g., comprising hardware, firmware and/or executing software) performs any of various transformations to generate reference information which indicates that an execution of an instruction of a given instruction type is to comprise the performance of multiple µops as variously described herein.

The combination of a LoadCheck µop and Move µop according to some embodiments is to be contrasted, for example, from a combination of three distinct µops - i.e., comprising a Load µop, followed by a Compare µop, and then followed by a Move µop. As compared to such a three µop sequence, some embodiments provide a two µop sequence which requires fewer cycles to make a predicted data value available in a register file. Moreover, the two µop sequence of some embodiments uses the same physical register twice, thus reducing by at least one the number of physical registers needed to make such a predicted data value available.

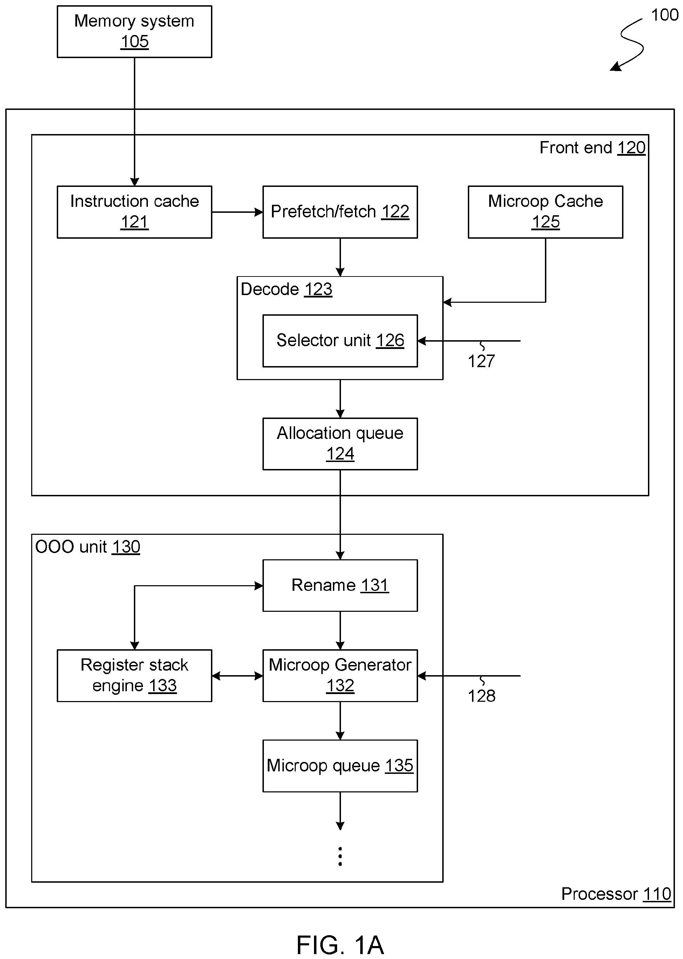

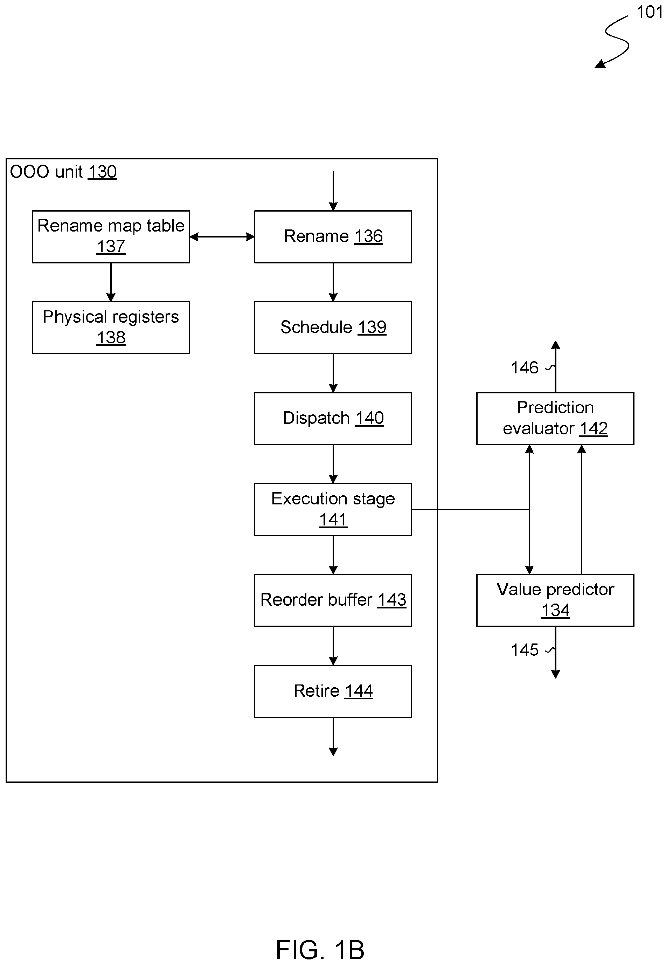

FIGs. 1A, 1B show features of a system 100 to provide value prediction information according to an embodiment. The system 100 illustrates one example of an embodiment comprising logic - e.g., including hardware, firmware and/or executing software - which provides functionality to specify or otherwise indicate that an execution of an instruction is to comprise performing a set of µops which includes a LoadCheck µop and a Move µop. In an embodiment, an operand of the Move µop is (or indicates) a predicted value of data which is loaded with the LoadCheck µop - e.g., wherein the Move µop is a next µop after the LoadCheck µop in a sequence of µops.

As shown in FIGs. 1A, 1B, system 100 comprises a processor 110, and a memory system 105 coupled thereto. A front-end 120 of processor 110 provides functionality to fetch (e.g., prefetch) and decode instructions of a software process which is to be executed with processor 110. An out-of-order (OOO) execution unit 130 of processor 110 is coupled to receive and execute the decoded instructions which are provided with front end 120. A view 101 of some additional stages in processor 110 is provided in FIG. 1B.

By way of illustration and not limitation, instructions are variously (pre)fetched from one or more levels of an instruction cache 121 and/or from memory system 105 by a prefetch/fetch stage 122. The instructions are then decoded by a decode stage 123. In one such embodiment, once decoded, the instructions are provided, via an allocation queue 124, to execution unit 130.

Subsequently, the decoded instructions have their architecturally-visible registers (i.e., those registers named in software code) renamed to register stack engine (RSE) registers by an architectural rename stage 131. In one embodiment, the architectural rename stage 131 is supported by a register stack engine 133 that permits the spilling, to a register stack backing store, of only those registers actually allocated to a function. In other embodiments, the architecturally-visible registers are renamed to physical registers without the intermediate RSE register stage. Once the instructions have their architecturally-visible registers renamed to RSE registers, each instruction is then represented by a set of one or more micro-operations (micro-ops). The corresponding sets of micro-ops are issued by a micro-op generator stage 132. The micro-ops use the RSE register renaming provided by the architectural rename stage 131 and register stack engine 133.

Sets of micro-ops issuing from micro-op generator stage 132 are held in a micro-op queue 135, prior to having their RSE registers renamed to physical registers in order to support subsequent OOO execution. In one embodiment, an OOO physical rename stage 136 makes use of a rename map table 137 to map RSE registers to physical registers 138. Once the renaming to physical registers is performed, then the micro-ops are scheduled and dispatched by a schedule stage 139 and a dispatch stage 140, respectively.

The micro-ops are then executed in an execution stage 141. In one embodiment, execution stage 141 includes several execution units. In one embodiment, these several execution units are of several specialized types, such as branch execution units, floating point execution units, and integer execution units. It is noteworthy that the actual determination of a value is first made in the execution stage 141, when the value is calculated. The execution results from the execution stage 141 are then put back into program order in a reorder buffer 143 prior to updating the machine state in a retirement stage 144.

To facilitate the efficient running of an operating system, application or other such software process, processor 110 further provides value prediction functionality with the illustrative value predictor 134 shown. Value predictor 134 is coupled to snoop or otherwise detect a result of a given µop being performed with execution stage 141. For example, value predictor 134 identifies a first value as being a returned value or other such result of an executed µop. Based on the first value, value predictor 134 determines a second value to represent a prediction of some data which would result from a later execution of another instruction (e.g., a similar instruction of the same instruction type). By way of illustration and not limitation, value predictor 134 predicts a data value using operations adapted - for example - from a stride prediction technique, a last value prediction technique, a finite context method (FCM), an enhanced VTAGE enhanced stride (EVES) prediction technique, a value tagged geometric (VTAGE) prediction technique and/or any of various other known value prediction techniques. However, some embodiments are not limited to a particular prediction algorithm according to which a value prediction is generated, and various known value prediction techniques are not detailed herein to avoid obscuring certain features of such embodiments. In other embodiments, the value predictor 134 is further configured to also be used as a branch predictor, a loop predictor, or in other configurations where a prediction (and, for example, a confidence value for that prediction) is advantageous.

In some embodiments, value predictor 134 provides a predicted data value (or an indication thereof) as an output signal 145. In one such embodiment, the predicted data value is specified or otherwise indicated to one or more other stages of processor 110. For example, the predicted value is provided to micro-op generator stage 132, via a signal 128 (e.g., signal 145), for inclusion of said predicted value as an operand of a µop (such as a Move µop). Additionally or alternatively, the predicted value is provided or otherwise indicated, via a signal 127 (e.g., signal 145), to a selector unit 126 which is included in, or otherwise coupled to operate with, decode stage 123.

In one such embodiment, selector unit 126 provides functionality to determine at least in part a decoding of an instruction based on signal 127. For example, selector unit 126 determines whether the execution of an instruction is to include the performance of multiple µops, comprising a LoadCheck µop and a Move µop (which is to move a predicted value of data that is to be loaded by the LoadCheck µop). By way of illustration and not limitation, selector unit 126 provides functionality to select between provisioning an indication of a Load µop to allocation queue 124, and provisioning to allocation queue 124 an indication of a combination of a LoadCheck µop and a Move µop. In an embodiment, the selected indication comprises an at least partial "pre-decoded" specification one or more µops - e.g., where the specification retrieved, copied or otherwise accessed from a micro-op cache 125 (or other suitable repository). Such selecting is performed, for example, based on signal 127 indicating that a predicted data value is available.

In some embodiments, signal 127 further indicates or is otherwise based on a determination that, according to a predefined criteria, there is some minimum required level of confidence in a predicted data value which is to be subject of a Move µop. By way of illustration and not limitation, value predictor 134 further provides functionality to determine a confidence metric for a given predicted data value - e.g., wherein the confidence metric is generated using operations adapted from conventional value prediction techniques. Based on a value of the confidence metric, value predictor 134 evaluates whether the corresponding predicted value satisfies some threshold criteria for minimum confidence - e.g., by determining whether the value is within a range of possible values (the range determined by one or more threshold values). In one such embodiment, the availability of the predicted value for use in a µop (e.g., a Move µop) is predicated on the result of such a confidence evaluation.

In some embodiments, processor 110 further comprises a prediction evaluator 142 including circuitry which is coupled to receive an architectural value which is generated as a result of a µop being performed with execution stage 141, and to further receive from value predictor 134 a previously generated value representing a prediction of what said architectural value would be. Prediction evaluator 142 performs a check based on the architectural value to determine whether the corresponding value prediction was valid. Where such a validity check indicates that the value prediction is invalid, prediction evaluator 142 selectively asserts a signal 146 to clear at least some execution state of OOO unit 130 (e.g., including a state of micro-op queue 135, schedule stage 139, dispatch stage 140, execution stage 141 and/or the like).

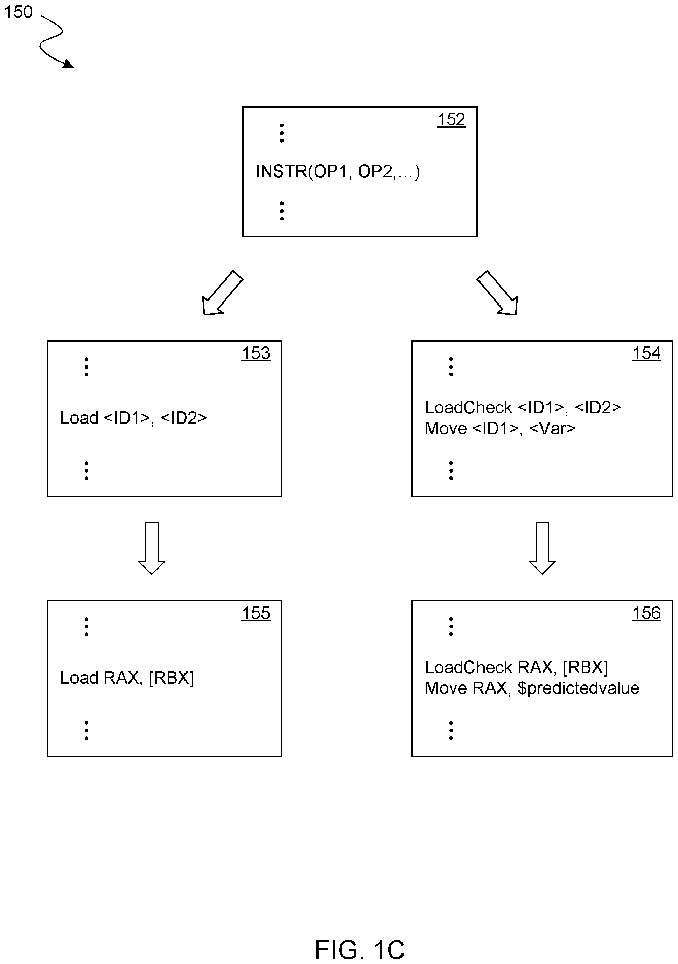

FIG. 1C shows a mapping diagram 150 representing operations to provide a sequence of micro-operations according to an embodiment. Mapping diagram 150 illustrates operations to transform an instruction into multiple µops which are to be performed as part of an execution of said instruction. Such a transformation is provided, at least in part, with a decoder and/or other suitable circuitry of a processor (such as processor 110, for example).

As shown in FIG. 1C, mapping diagram 150 shows a set of instructions 152 of an operating system, application and/or other such software process. The set of instructions 152 comprises an instruction INSTR which includes one or more operands, such as the illustrative OP1, OP2 shown. In an embodiment, the instruction INSTR is any of various processor instructions, the execution of which is to perform at least some loading of data from one location to another location (e.g., from one register to another register). In the illustrative scenario shown, a location from which data is to be loaded, and a location to which data is to be loaded, are indicated in the set of instructions 152 with operands OP1 and OP2 (for example). It is noted that, in an embodiment, the instruction INSTR is not limited to any particular type of instruction which results in a data load.

In some embodiments, a decoding and/or other suitable processing of the instruction INSTR results in the generation and/or other accessing of information which specifies or otherwise indicates that multiple µops are to be performed. In one such embodiment, the multiple µops comprise a LoadCheck µop, and a Move µop which is to move a predicted value of data which is to be loaded by the LoadCheck µop.

By way of illustration and not limitation, some embodiments access information 154 (e.g., pre-decoded instructions, or other suitable reference information) which provides a partial specification of a sequence of µops as corresponding to an instruction type of the instruction INSTR. Information 154 is an only partial specification of the sequence at least insofar as information 154 has yet to be supplemented or otherwise modified based on the operands OP1, OP2,..., of the instruction INSTR.

For example, based on set of instructions 152, information 154 (or a copy thereof) is modified to generate information 156 which provides a complete specification of the µops to be performed. In the example embodiment shown, the modification of information 154 comprises providing an identifier of some destination register RAX (to receive data) in a field ID1 of the LoadCheck µop. Furthermore, the modification of information 154 comprises providing an identifier of some source register RBX (from which data is to be loaded) in another field ID2 of the LoadCheck µop. Further still, the modification of information 154 comprises providing an identifier of the destination register RAX in a field ID1 of the Move µop - e.g., in addition to providing an identifier of a variable which represents a most recently indicated value prediction to be determined. After such modification, the resulting information 156 is provided to any of various processor resources - e.g., such as those of OOO unit 130 - to facilitate a performance of the specified µops.

In one such embodiment, the actual performance of the µops is at least partially out-of-order - i.e., according to an order other than that of the sequence indicated by information 156. For example, the LoadCheck µop performs a validity check only once an architectural value of the loaded data is determined (e.g., only after the data load is completed). By contrast, the Move µop does not have to wait for such a predicate event. Therefore, some embodiments facilitate a completion of the Move µop prior to the completion of the LoadCheck µop. As a result of the Move µop being scheduled for earlier execution, the predicted data value (which is included as an operand of the Move µop) is made available in a register file prior to the completion of the LoadCheck µop.

The generation of information 156 based on information 154 and on the operands OP1, OP2,... of the instruction INSTR is to be contrasted, for example, by a generation of alternative information 155 which is also shown in FIG. 1C. Information 155 illustrates an alternative scenario wherein execution of the instruction INSTR is instead to include a performance of one or more µops comprising a Load µop - e.g., according to conventional techniques - rather than a combination of a LoadCheck µop and a Move µop.

By way of illustration and not limitation, some embodiments selectively access information 153 (e.g., pre-decoded instructions, or other suitable reference information) which provides a partial specification of one or more µops as also corresponding to the instruction type of the instruction INSTR. Information 153 is an only partial specification of the one or more µops at least insofar as information 153 has yet to be supplemented or otherwise modified based on the operands OP1, OP2,..., of the instruction INSTR. In an embodiment, information 153 is selectively accessed - e.g., in lieu of information 154 being so accessed - based on set of instructions 152, and further based on a determination that a value prediction, for the load to be performed, is unavailable (or, for example, does not meet a predetermined confidence criteria).

For example, based on set of instructions 152 and an unavailability of a prediction for the load data, information 153 (or a copy thereof) is modified to generate information 155 which provides a complete specification of the one or more µops to be performed. In the example embodiment shown, the modification of information 153 comprises providing an identifier of some destination register RAX in a field ID1 of the Load µop. Furthermore, the modification of information 153 comprises providing an identifier of some source register RBX in another field ID2 of the Load µop.

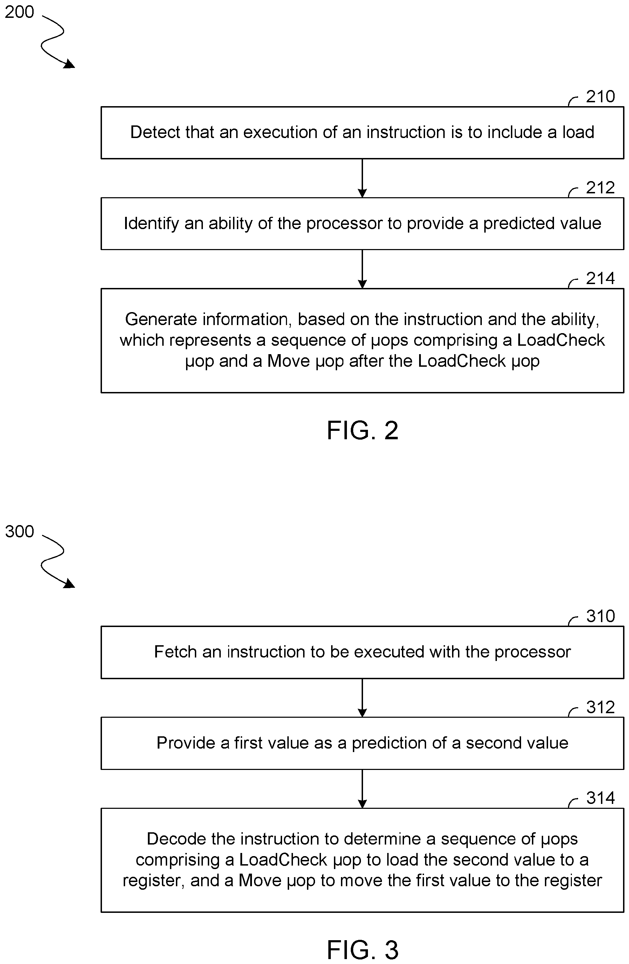

FIG. 2 shows features of a method 200 to facilitate an execution of micro-operations according to an embodiment. Method 200 illustrates one example of an embodiment which facilitates a provisioning of information describing a series of micro-operations (µops), wherein the information is based on an indication of an executable instruction (e.g., based on an identified instruction type). In an embodiment, an instruction, which is of an identified instruction type, is to be executed at least in part by performing the series of µops. Operations such as those of method 200 are performed, for example, with circuitry of processor 110.

As shown in FIG. 2, method 200 comprises (at 210) detecting that an execution of an instruction by a processor is to include a load of a first value to a first register. Such detecting comprises - for example - receiving, snooping or otherwise detecting an instruction which comprises operands which explicitly or implicitly identify a source repository (such as a register) of the first value, and a destination repository into which the first value is to be loaded. Method 200 further comprises (at 212) identifying an ability of the processor to provide a second value as a prediction of the first value. In one such embodiment, the identifying at 212 is based on some or all of signals 145, 127, 128 (for example).

Based on the instruction, and on the ability identified at 212, method 200 (at 214) generates information which represents a sequence of µops comprising a LoadCheck µop and a Move µop. In one such embodiment, the LoadCheck µop is to perform the load of the first value to the first register, and to check a validity condition of the prediction (i.e., the second value) based on a completion of the load. The Move µop is to move the second value to the first register. In one embodiment, the Move µop is a next µop of the sequence after the LoadCheck µop.

In some embodiments, generating the information at 214 comprises performing an at least partial decoding of the instruction - e.g., wherein the information comprises, or is otherwise based on, one of information 154 or information 156. Additionally or alternatively, the generating at 214 comprises determining an instruction type, and accessing data which is identifies a description of the sequence as being associated with the instruction type. In one such embodiment, the description is provided with information 153 - e.g., wherein method 200 further performs operations (not shown) to supplement the description based on one or more operands of the instruction.

FIG. 3 shows features of a method 300 to facilitate an execution of micro-operations according to an embodiment. Method 300 illustrates one example of an embodiment wherein an instruction is decoded to determine a sequence of µops to be performed. In various embodiments, method 300 is performed with circuitry of processor 110 - e.g., based on reference information (such as information 153) that is generated, for example, by method 200.

As shown in FIG. 3, method 300 comprises (at 310) fetching an instruction to be executed with the processor. For example, the fetching at 310 is performed with prefetch/fetch stage 122 of front end 120, in an embodiment. Method 300 further comprises (at 312) providing a first value as a prediction of a second value. For example, the instruction fetched at 310 comprises one or more operands which explicitly or implicitly identify a source repository (such as a register) of the second value, and a destination repository into which the second value is to be loaded. In one such embodiment, the first value is retrieved by, or otherwise provided to, decode stage 123 (or other suitable processor circuitry) - e.g., based on an instruction type of the instruction, an instruction pointer value for the instruction, or the like.

Method 300 further comprises (at 314) decoding the instruction, wherein the decoding determines a sequence of µops (such as those represented in information 156, for example). In an embodiment, the µops comprise a LoadCheck µop which is to perform a load of the second value to a first register, and is to check a validity condition of the prediction based on a completion of the load. The Move µop is to move the first value (i.e., the prediction of the second value) to the first register.

In one such embodiment, the decoding at 314 comprises performing a selection between a provisioning of information (e.g., information 153) which describes a Load µop, and a provisioning of information (e.g., information 154) which describes a combination of the LoadCheck µop and the Move µop. Such a selection is performed, for example, based on a determination that the first value (i.e., the prediction of the second value) is available - e.g., wherein the selection is based on a determination that a confidence metric, which corresponds to the first value, satisfies a threshold criteria.

In some embodiments, the decoding at 314 additionally or alternatively comprises accessing a cache of pre-decoded information (such as micro-op cache 125) to determine a pre-decoded version of the LoadCheck µop and/or the Move µop. In one such embodiment, the decoding further comprises combining the first value, an identifier of the first register, and the pre-decoded version of the Move µop to generate a specification of the Move µop. In another embodiment, decoding the instruction at 314 comprises accessing a description of Load µop, which is identified as corresponding to an instruction type of instruction, and transforming the Load µop into a description of µops comprising the LoadCheck µop and the Move µop.

In various embodiments, one or more other operations (not shown) of method 200 comprise performing an execution of the Move µop, wherein based on a scheduling of the execution, the first value is available at a register file prior to a completion of the load which is to be performed with the LoadCheck µop. Additionally or alternatively, such one or more other operations comprise performing an evaluation to determine whether the first value is equal to the second value, and determining whether to selectively flush an execution state of the processor based on the evaluation.

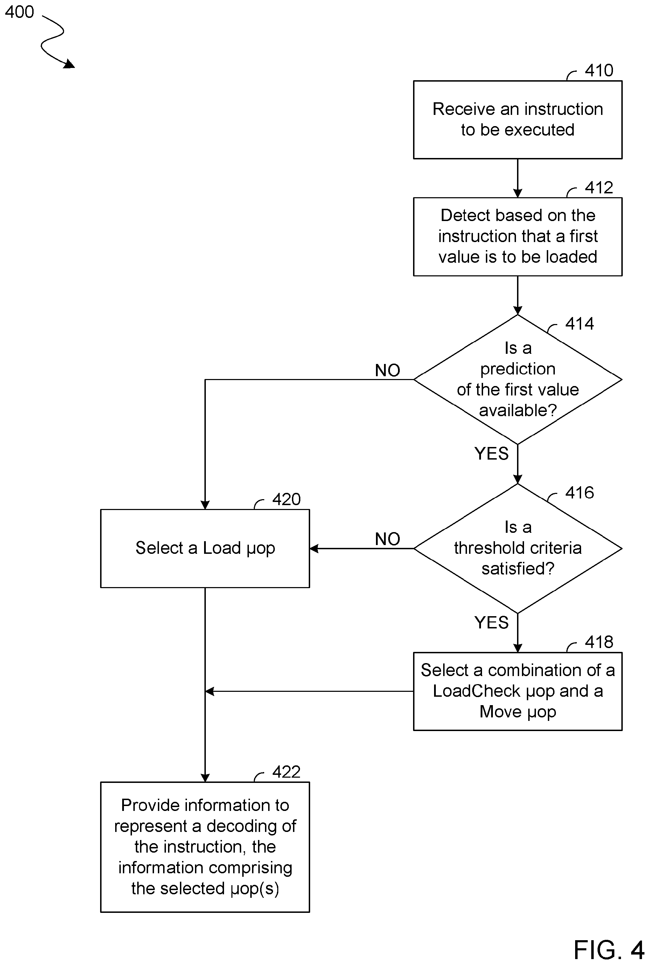

FIG. 4 shows features of a method 400 to facilitate the execution of an instruction according to another embodiment. Method 400 illustrates one example of an embodiment wherein one or more µops are selected to be performed in the execution of an instruction, wherein such selection is based on an availability (if any) of a value prediction for data to be loaded by one such µop. In an embodiment, method 400 is performed with processor circuitry such as that of processor 110 - e.g., wherein method 400 accesses reference information (such as information 153 or information 154) generated according to method 200, and/or wherein method 400 includes some or all of method 300.

As shown in FIG. 4, method 400 comprises (at 410) receiving an instruction which is to be executed with a processor. In an embodiment, the instruction is received at 410 by logic - e.g., including any of various combinations of hardware, firmware and/or executing software - which is to at least partially decode, compile, assemble and/or otherwise process the instruction to generate a representation of a corresponding one or more µops. For example, the instruction is received at 410 by a decoder unit, from instruction fetch (e.g., a prefetch) circuitry such as that of prefetch/fetch stage 122.

Method 400 further comprises (at 412) detecting, based on the instruction received at 410, that an execution of the instruction is to include loading some first value to a register. For example, in one such embodiment, the instruction directly or indirectly identifies the register and the first value - e.g., wherein operands of the instruction comprise an identifier of the register, and another identifier of a different register from which the first value is to be loaded.

Method 400 further comprises performing an evaluation (at 414) to determine whether there is available some second value which is provided as a prediction of what the first value is to be. For example, an indication of such availability is provided to decode stage 123 via signal 127, in one embodiment.

Where it is determined at 414 that the second value is available as a prediction of the first value, method 400 performs another evaluation (at 416) to determine whether a confidence metric, corresponding to the second value, satisfies some threshold criteria which is indicative of a sufficient confidence in the value prediction. For example, the evaluating at 416 comprises determining whether a value of the confidence metric is in some predetermined range of possible values for indicating sufficient confidence. In one such embodiment, the evaluating at 416 tests whether the value of the confidence metric is greater than (or, for example, equal to or greater than) some threshold minimum level of confidence.

Where it is determined at 416 that the corresponding confidence metric satisfies the threshold criteria, method 400 (at 418) selects information, describing a combination of both a LoadCheck µop and a Move µop, to be included in a representation of an at least partial decoding of the instruction. In one example embodiment, information 154 is selected over information 153 at 418. After the selecting at 418, method 400 (at 420) provides the selected information (or a modified version thereof) to represent an at least partial decoding of the instruction - i.e., wherein the information comprises a description of µops selected at 418.

Where it is instead determined at 416 that the corresponding confidence metric does not satisfy the threshold criteria, method 400 (at 420) selects other information, describing a Load µop, to be included in the representation of the at least partial decoding of the instruction. In one example embodiment, information 153 is selected over information 154 at 420. After the selecting at 420, method 400 performs an alternative version of the providing at 422 - i.e., wherein the provided information instead comprises a description of the Load µop selected at 420. Where it is instead determined at 414 that the predicted second value is unavailable, method 400 (at 420) performs an instance of the selecting at 420, followed by a corresponding instance of the providing at 422.

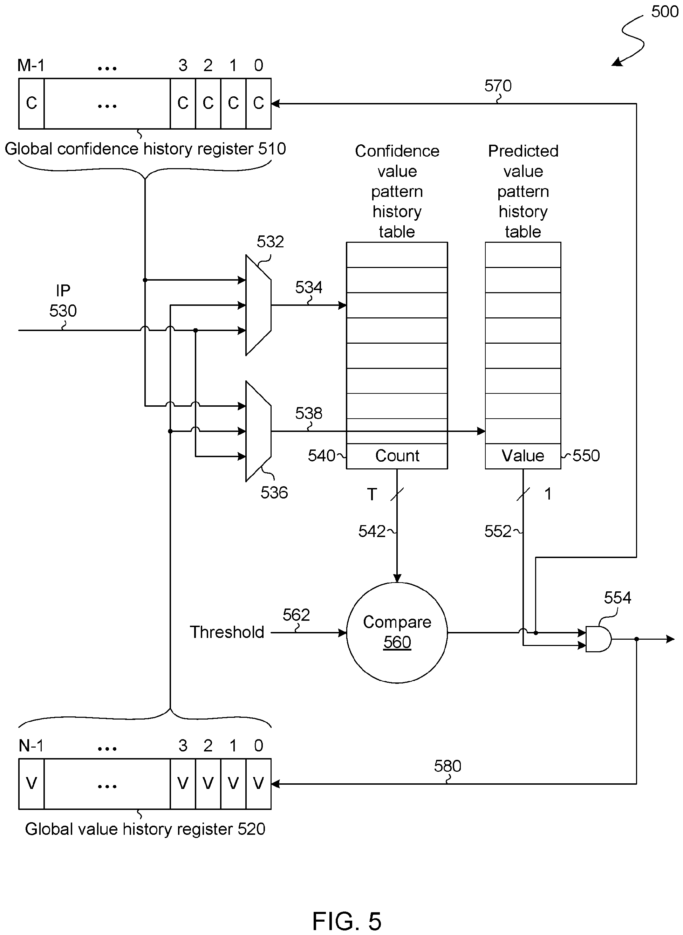

FIG. 5 shows features of a predictor 500 to determine a value prediction for use by a µop in a sequence of µops according to an embodiment. The predictor 500 illustrates one example of an embodiment which provides a predicted value of data which is the subject of a LoadCheck µop - e.g., wherein the predicted value is also the subject of a Move µop. In various embodiments, predictor 500 provides functionality such as that of value predictor 134 - e.g., wherein one of methods 200, 300, 400 includes or is otherwise based on operations by predictor 500.

As shown in FIG. 5, predictor 500 comprises provides functionality to produce a confidence value 570 and a predicted value 580. More particularly, predictor 500 includes a global confidence history register 510, a global value history register 520, a confidence value pattern history table 540, a predicted value pattern history table 550, and a pair of indexing functions: confidence index function 532 and value index function 536. In other embodiments, other combinations of circuit elements are used. For example, the global confidence history is stored in another form of circuit rather than a register. And the confidence value 570, shown here as a true/false signal indicating "confident" and "not confident", in other embodiments indicates a numerical value other than 0 and 1.

Global confidence history register 510 is shown as a shift register of M bits. Each time a prediction is made, and a corresponding confidence value signal 570 is issued, the corresponding logical value C is left shifted into global confidence history register 510. In this manner, global confidence history register 510 contains a global history of the most recent M confidence values corresponding to predictions made by predictor 500. Note that these global confidence history entries are from predictions made concerning differing instructions. In other embodiments, other kinds of memory elements are used instead of a shift register to hold the global confidence history.

Similarly, global value history register 520 is shown as a shift register of N bits. Each time a predicted value signal 580 is issued, the corresponding data value V is shifted into global value history register 520. In this manner, global value history register 520 contains a global history of the most recent N predicted values corresponding to predictions made by predictor 500. In other embodiments, other kinds of memory elements are used instead of a shift register to hold the global value history.

The global confidence history contained in global confidence history register 510 and the global value history contained in global value history register 520 are combined with the instruction pointer (IP) 530 to index pattern history tables. In one embodiment, there is a separate confidence value pattern history table 540 and a predicted value pattern history table 550. The indexing is performed by an index function circuit element, such as confidence index function 532 and value index function 536. In one embodiment, the index function circuit elements, confidence index function 532 and value index function 536, perform a hashing function of the IP 530 with the contents of global confidence history register 510 and global value history register 520. The particular hashing function is to concatenate the contents of global confidence history register 510 and global value history register 520 with a few bits of the IP 530. In other embodiments, the hashing function is to exclusive-or the contents of global confidence history register 510 and global value history register 520 with the IP 530. The particular form of the hashing function is not significant.

In some embodiments, the indexing functions, confidence index function 532 and value index function 536, do not use all three of the contents of global confidence history register 510, the contents of global value history register 520, and the IP 530. For example, some embodiments use the IP 530 hashed with only the contents of global confidence history register 510, or the IP 530 hashed with only the contents of global value history register 520. Similarly, the indexing functions do not use all the bits present of the contents of global confidence history register 510 and global value history register 520. In some embodiments, the indexing functions differ between confidence index function 532 and value index function 536. In other embodiments, there is a single index function circuit to support an undivided combined pattern history table.

In the FIG. 5 embodiment, a pair of pattern history tables are shown, confidence value pattern history table 540 and predicted value pattern history table 550. In order to prepare a predicted value, the value indexing function 536 sends an index 538 to predicted value pattern history table 550. The indexed content of predicted value pattern history table 550 emerges as a value signal 552. In order to prepare a confidence value, the confidence indexing function 532 sends an index 534 to confidence value pattern history table 540. The indexed content of confidence value pattern history table 540 emerges as a confidence count 542. The confidence count 542 is compared with a threshold signal 562 in a compare circuit 560 to form a confidence value 570. In other embodiments, the confidence count 542 is itself sent as a confidence value.

Subsequent to the prediction, when the actual (architectural) value is determined, the entry in the predicted value pattern history table is set to the architectural value. The corresponding confidence count in the confidence value pattern history table 540 is incremented by one (or another number) if the predicted value matched the architectural value, or is decremented by one (or another number) if the predicted value did not match the architectural value. In one embodiment, the confidence count is cleared, rather than decremented, if the predicted value did not match the architectural value.

In the FIG. 5 embodiment, the predicted value 580 is shown as being selectively masked by the confidence value 570 with the action of gate 554. When the confidence value 570 indicates not confident, the predicted value 580 is suppressed as irrelevant. This advantageously reduces the size of the pattern history tables. In other embodiments, the confidence value 570 does not mask the predicted value 580.

The value of the threshold 562 is determined, for example, by simulations and/or other implementation specific information. If the value of the threshold 562 is set too high, then there are too few confident predictions. If the value of the threshold 562 is set too low, then there are too many incorrect predictions and resulting recover processes. In one embodiment, a threshold value in the range of 8 to 10 is useful. The threshold value is used to determine the individual counter sizes within the confidence value pattern history table. In one embodiment, the individual counters which will hold the confidence count values are implemented as saturating counters with a saturation value near that of the selected threshold value.

After a misprediction, the global confidence history register 510 and global value history register 520 have their contents repaired so that the entries for the confidence value and predicted value, previously shifted in, are set to zero.

The figures described herein detail exemplary architectures and systems to implement embodiments of the above. In some embodiments, one or more hardware components and/or instructions described herein are emulated as detailed below, or implemented as software modules.

Embodiments of the instruction(s) detailed above are embodied may be embodied in a "generic vector friendly instruction format" which is detailed herein. In other embodiments, such a format is not utilized and another instruction format is used, however, the description herein of the writemask registers, various data transformations (swizzle, broadcast, etc.), addressing, etc. is generally applicable to the description of the embodiments of the instruction(s) above. Additionally, exemplary systems, architectures, and pipelines are detailed herein. Embodiments of the instruction(s) above may be executed on such systems, architectures, and pipelines, but are not limited to those detailed.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source 1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, September 2014; and see Intel^{®} Advanced Vector Extensions Programming Reference, October 2014).

### Exemplary Instruction Formats

Embodiments of the instruction(s) described herein may be embodied in different formats. Additionally, exemplary systems, architectures, and pipelines are detailed herein. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

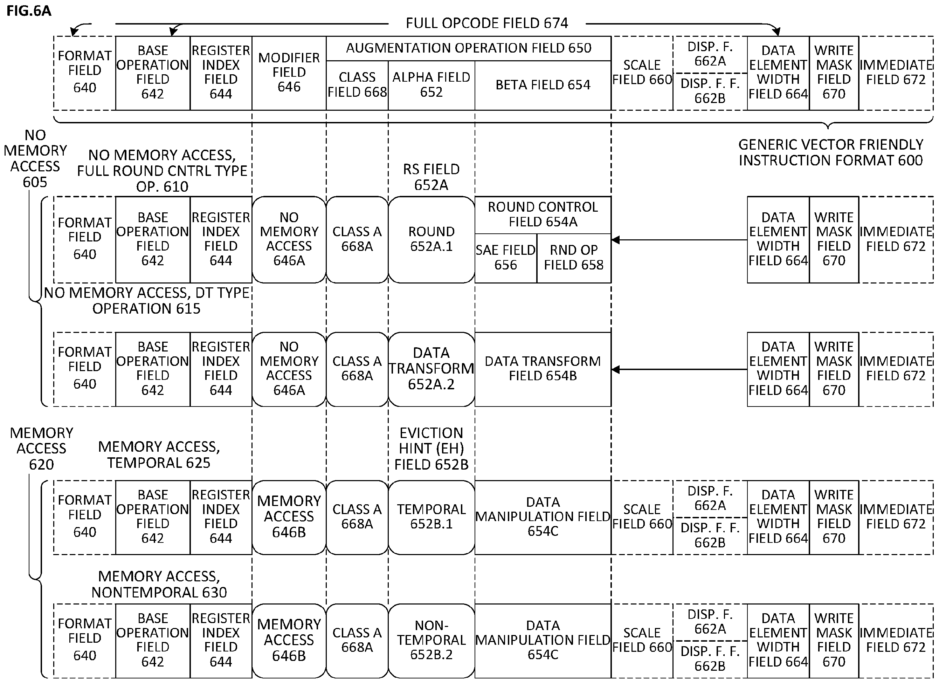

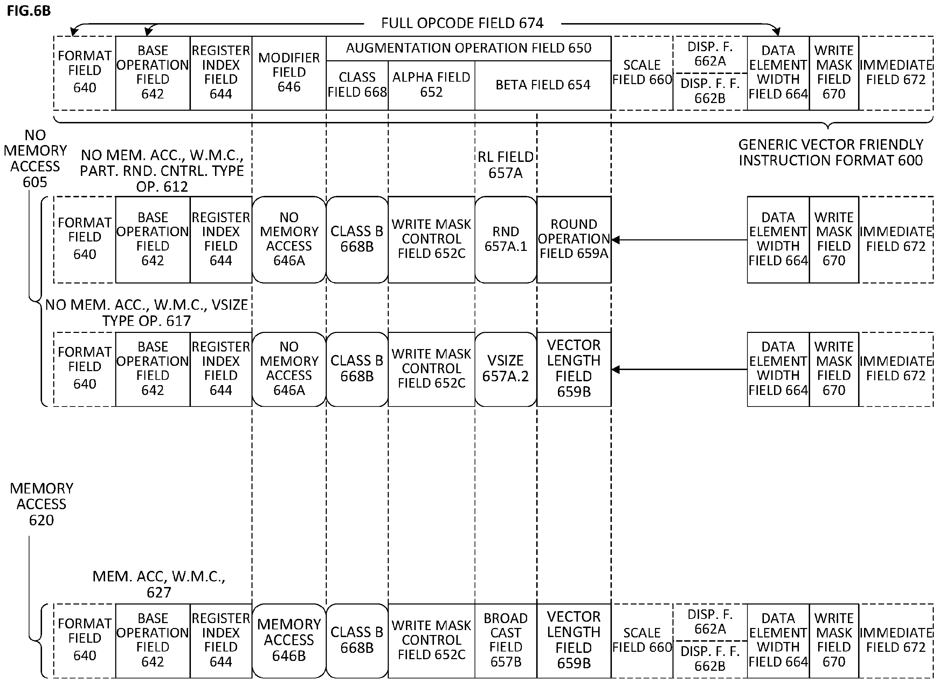

FIGs. 6A through 6B are block diagrams illustrating a generic vector friendly instruction format and instruction templates thereof according to embodiments of the invention. FIG. 6A is a block diagram illustrating a generic vector friendly instruction format and class A instruction templates thereof according to embodiments of the invention; while FIG. 6B is a block diagram illustrating the generic vector friendly instruction format and class B instruction templates thereof according to embodiments of the invention. Specifically, a generic vector friendly instruction format 600 for which are defined class A and class B instruction templates, both of which include no memory access 605 instruction templates and memory access 620 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in FIG. 6A include: 1) within the no memory access 605 instruction templates there is shown a no memory access, full round control type operation 610 instruction template and a no memory access, data transform type operation 615 instruction template; and 2) within the memory access 620 instruction templates there is shown a memory access, temporal 625 instruction template and a memory access, non-temporal 630 instruction template. The class B instruction templates in FIG. 6B include: 1) within the no memory access 605 instruction templates there is shown a no memory access, write mask control, partial round control type operation 612 instruction template and a no memory access, write mask control, vsize type operation 617 instruction template; and 2) within the memory access 620 instruction templates there is shown a memory access, write mask control 627 instruction template.

The generic vector friendly instruction format 600 includes the following fields listed herein in the order illustrated in FIGs. 6A through 6B.

Format field 640 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 642 - its content distinguishes different base operations.

Register index field 644 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 646 - its content distinguishes occurrences of instructions in the generic vector instruction format that specify memory access from those that do not; that is, between no memory access 605 instruction templates and memory access 620 instruction templates (e.g., no memory access 646A and memory access 646B for the class field 646 respectively in FIGs. 6A-B). Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 650 - its content distinguishes which one of a variety of different operations to be performed in addition to the base operation. This field is context specific. In one embodiment of the invention, this field is divided into a class field 668, an alpha field 652, and a beta field 654. The augmentation operation field 650 allows common groups of operations to be performed in a single instruction rather than 2, 3, or 4 instructions.

Scale field 660 - its content allows for the scaling of the index field's content for memory address generation (e.g., for address generation that uses 2scale ^{∗} index + base).

Displacement Field 662A- its content is used as part of memory address generation (e.g., for address generation that uses 2scale ^{∗} index + base + displacement).

Displacement Factor Field 662B (note that the juxtaposition of displacement field 662A directly over displacement factor field 662B indicates one or the other is used) - its content is used as part of address generation; it specifies a displacement factor that is to be scaled by the size of a memory access (N) - where N is the number of bytes in the memory access (e.g., for address generation that uses 2scale ^{∗} index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 674 (described later herein) and the data manipulation field 654C. The displacement field 662A and the displacement factor field 662B are optional in the sense that they are not used for the no memory access 605 instruction templates and/or different embodiments may implement only one or none of the two.

Data element width field 664 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 670 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 670 allows for partial vector operations, including loads, stores, arithmetic, logical, etc. While embodiments of the invention are described in which the write mask field's 670 content selects one of a number of write mask registers that contains the write mask to be used (and thus the write mask field's 670 content indirectly identifies that masking to be performed), alternative embodiments instead or additional allow the write mask field's 670 content to directly specify the masking to be performed.

Immediate field 672 - its content allows for the specification of an immediate. This field is optional in the sense that is it not present in an implementation of the generic vector friendly format that does not support immediate and it is not present in instructions that do not use an immediate.

Class field 668 - its content distinguishes between different classes of instructions. With reference to FIGs. 6A-B, the contents of this field select between class A and class B instructions. In FIGs. 6A-B, rounded corner squares are used to indicate a specific value is present in a field (e.g., class A 668A and class B 668B for the class field 668 respectively in FIGs. 6A-B).

### Instruction Templates of Class A

In the case of the non-memory access 605 instruction templates of class A, the alpha field 652 is interpreted as an RS field 652A, whose content distinguishes which one of the different augmentation operation types are to be performed (e.g., round 652A. 1 and data transform 652A.2 are respectively specified for the no memory access, round type operation 610 and the no memory access, data transform type operation 615 instruction templates), while the beta field 654 distinguishes which of the operations of the specified type is to be performed. In the no memory access 605 instruction templates, the scale field 660, the displacement field 662A, and the displacement scale filed 662B are not present.

### No-Memory Access Instruction Templates - Full Round Control Type Operation

In the no memory access full round control type operation 610 instruction template, the beta field 654 is interpreted as a round control field 654A, whose content(s) provide static rounding. While in the described embodiments of the invention the round control field 654A includes a suppress all floating point exceptions (SAE) field 656 and a round operation control field 658, alternative embodiments may support may encode both these concepts into the same field or only have one or the other of these concepts/fields (e.g., may have only the round operation control field 658).

SAE field 656 - its content distinguishes whether or not to disable the exception event reporting; when the SAE field's 656 content indicates suppression is enabled, a given instruction does not report any kind of floating-point exception flag and does not raise any floating point exception handler.

Round operation control field 658 - its content distinguishes which one of a group of rounding operations to perform (e.g., Round-up, Round-down, Round-towards-zero and Round-to-nearest). Thus, the round operation control field 658 allows for the changing of the rounding mode on a per instruction basis. In one embodiment of the invention where a processor includes a control register for specifying rounding modes, the round operation control field's 658 content overrides that register value.

### No Memory Access Instruction Templates - Data Transform Type Operation

In the no memory access data transform type operation 615 instruction template, the beta field 654 is interpreted as a data transform field 654B, whose content distinguishes which one of a number of data transforms is to be performed (e.g., no data transform, swizzle, broadcast).

In the case of a memory access 620 instruction template of class A, the alpha field 652 is interpreted as an eviction hint field 652B, whose content distinguishes which one of the eviction hints is to be used (in FIG. 6A, temporal 652B.1 and non-temporal 652B.2 are respectively specified for the memory access, temporal 625 instruction template and the memory access, non-temporal 630 instruction template), while the beta field 654 is interpreted as a data manipulation field 654C, whose content distinguishes which one of a number of data manipulation operations (also known as primitives) is to be performed (e.g., no manipulation; broadcast; up conversion of a source; and down conversion of a destination). The memory access 620 instruction templates include the scale field 660, and optionally the displacement field 662A or the displacement scale field 662B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 652 is interpreted as a write mask control (Z) field 652C, whose content distinguishes whether the write masking controlled by the write mask field 670 should be a merging or a zeroing.

In the case of the non-memory access 605 instruction templates of class B, part of the beta field 654 is interpreted as an RL field 657A, whose content distinguishes which one of the different augmentation operation types are to be performed (e.g., round 657A. 1 and vector length (VSIZE) 657A.2 are respectively specified for the no memory access, write mask control, partial round control type operation 612 instruction template and the no memory access, write mask control, VSIZE type operation 617 instruction template), while the rest of the beta field 654 distinguishes which of the operations of the specified type is to be performed. In the no memory access 605 instruction templates, the scale field 660, the displacement field 662A, and the displacement scale filed 662B are not present.

In the no memory access, write mask control, partial round control type operation 612 instruction template, the rest of the beta field 654 is interpreted as a round operation field 659A and exception event reporting is disabled (a given instruction does not report any kind of floating-point exception flag and does not raise any floating point exception handler).

Round operation control field 659A - just as round operation control field 658, its content distinguishes which one of a group of rounding operations to perform (e.g., Round-up, Round-down, Round-towards-zero and Round-to-nearest). Thus, the round operation control field 659A allows for the changing of the rounding mode on a per instruction basis. In one embodiment of the invention where a processor includes a control register for specifying rounding modes, the round operation control field's 658 content overrides that register value.

In the no memory access, write mask control, VSIZE type operation 617 instruction template, the rest of the beta field 654 is interpreted as a vector length field 659B, whose content distinguishes which one of a number of data vector lengths is to be performed on (e.g., 128, 256, or 512 byte).

In the case of a memory access 620 instruction template of class B, part of the beta field 654 is interpreted as a broadcast field 657B, whose content distinguishes whether or not the broadcast type data manipulation operation is to be performed, while the rest of the beta field 654 is interpreted the vector length field 659B. The memory access 620 instruction templates include the scale field 660, and optionally the displacement field 662A or the displacement scale field 662B.

With regard to the generic vector friendly instruction format 600, a full opcode field 674 is shown including the format field 640, the base operation field 642, and the data element width field 664. While one embodiment is shown where the full opcode field 674 includes all of these fields, the full opcode field 674 includes less than all of these fields in embodiments that do not support all of them. The full opcode field 674 provides the operation code (opcode).

The augmentation operation field 650, the data element width field 664, and the write mask field 670 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

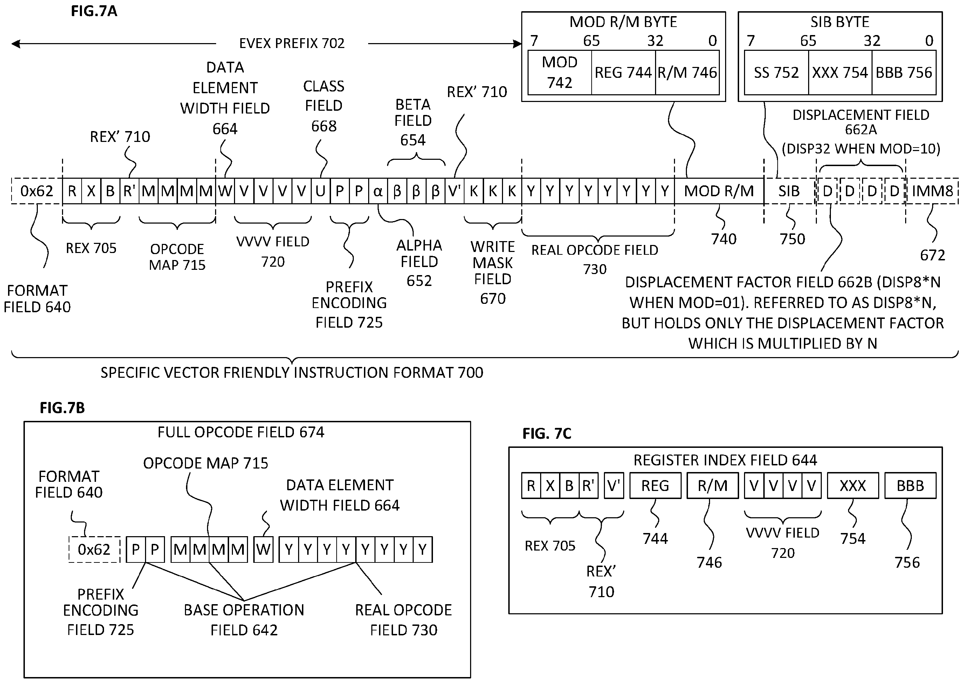

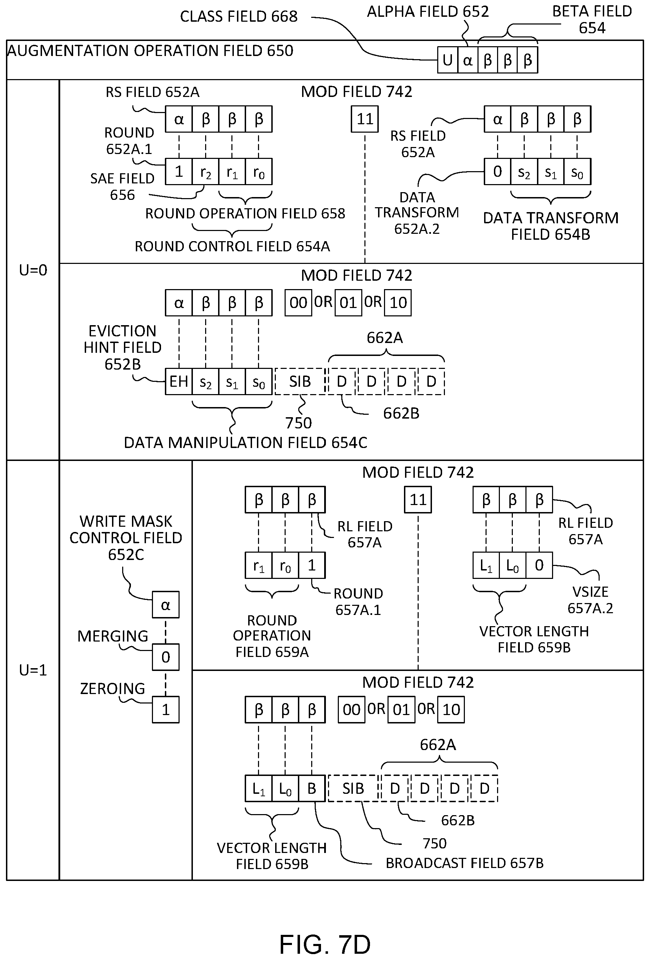

FIG. 7 is a block diagram illustrating an exemplary specific vector friendly instruction format according to embodiments of the invention. FIG. 7 shows a specific vector friendly instruction format 700 that is specific in the sense that it specifies the location, size, interpretation, and order of the fields, as well as values for some of those fields. The specific vector friendly instruction format 700 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from FIG. 6 into which the fields from FIG. 7 map are illustrated.

It should be understood that, although embodiments of the invention are described with reference to the specific vector friendly instruction format 700 in the context of the generic vector friendly instruction format 600 for illustrative purposes, the invention is not limited to the specific vector friendly instruction format 700 except where claimed. For example, the generic vector friendly instruction format 600 contemplates a variety of possible sizes for the various fields, while the specific vector friendly instruction format 700 is shown as having fields of specific sizes. By way of specific example, while the data element width field 664 is illustrated as a one bit field in the specific vector friendly instruction format 700, the invention is not so limited (that is, the generic vector friendly instruction format 600 contemplates other sizes of the data element width field 664).

The specific vector friendly instruction format 700 includes the following fields listed herein in the order illustrated in FIG. 7A.

EVEX Prefix (Bytes 0-3) 702 - is encoded in a four-byte form.

Format Field 640 (EVEX Byte 0, bits [7:0]) - the first byte (EVEX Byte 0) is the format field 640 and it contains 0x62 (the unique value used for distinguishing the vector friendly instruction format in one embodiment of the invention).

The second-fourth bytes (EVEX Bytes 1-3) include a number of bit fields providing specific capability.

REX field 705 (EVEX Byte 1, bits [7-5]) - consists of a EVEX.R bit field (EVEX Byte 1, bit [7] - R), EVEX.X bit field (EVEX byte 1, bit [6] - X), and 657BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 710 - this is the first part of the REX' field 710 and is the EVEX.R' bit field (EVEX Byte 1, bit [4] - R') that is used to encode either the upper 16 or lower 16 of the extended 32 register set. In one embodiment of the invention, this bit, along with others as indicated herein, is stored in bit inverted format to distinguish (in the well-known x86 32-bit mode) from the BOUND instruction, whose real opcode byte is 62, but does not accept in the MOD R/M field (described herein) the value of 11 in the MOD field; alternative embodiments of the invention do not store this and the other indicated bits herein in the inverted format. A value of 1 is used to encode the lower 16 registers. In other words, R'Rrrr is formed by combining EVEX.R', EVEX.R, and the other RRR from other fields.

Opcode map field 715 (EVEX byte 1, bits [3:0] - mmmm) - its content encodes an implied leading opcode byte (0F, OF 38, or OF 3).

Data element width field 664 (EVEX byte 2, bit [7] - W) - is represented by the notation EVEX.W. EVEX.W is used to define the granularity (size) of the datatype (either 32-bit data elements or 64-bit data elements).

EVEX.vvvv 720 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 720 encodes the 4 low-order bits of the first source register specifier stored in inverted (Is complement) form. Depending on the instruction, an extra different EVEX bit field is used to extend the specifier size to 32 registers.

EVEX.U 668 Class field (EVEX byte 2, bit [2]-U) - If EVEX.U = 0, it indicates class A or EVEX.U0; if EVEX.U = 1, it indicates class B or EVEX.U1.

Prefix encoding field 725 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 652 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 654 (EVEX byte 3, bits [6:4]-SSS, also known as EVEX.s2-0, EVEX.r2-0, EVEX.rr1, EVEX.LL0, EVEX.LLB; also illustrated with βββ) - as previously described, this field is context specific.

REX' field 710 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 670 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 730 (Byte 4) is also known as the opcode byte. Part of the opcode is specified in this field.

MOD R/M Field 740 (Byte 5) includes MOD field 742, Reg field 744, and R/M field 746. As previously described, the MOD field's 742 content distinguishes between memory access and non-memory access operations. The role of Reg field 744 can be summarized to two situations: encoding either the destination register operand or a source register operand, or be treated as an opcode extension and not used to encode any instruction operand. The role of R/M field 746 may include the following: encoding the instruction operand that references a memory address, or encoding either the destination register operand or a source register operand.

Scale, Index, Base (SIB) Byte 750 (Byte 6) - As previously described, the scale field's 660 content is used for memory address generation. SIB.SS 752, SIB.xxx 754 and SIB.bbb 756 - the contents of these fields have been previously referred to with regard to the register indexes Xxxx and Bbbb.

Displacement field 662A (Bytes 7-10) - when MOD field 742 contains 10, bytes 7-10 are the displacement field 662A, and it works the same as the legacy 32-bit displacement (disp32) and works at byte granularity.

Displacement factor field 662B (Byte 7) - when MOD field 742 contains 01, byte 7 is the displacement factor field 662B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 662B is a reinterpretation of disp8; when using displacement factor field 662B, the actual displacement is determined by the content of the displacement factor field multiplied by the size of the memory operand access (N). This type of displacement is referred to as disp8^{∗}N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 662B substitutes the legacy x86 instruction set 8-bit displacement. Thus, the displacement factor field 662B is encoded the same way as an x86 instruction set 8-bit displacement (so no changes in the ModRM/SIB encoding rules) with the only exception that disp8 is overloaded to disp8^{∗}N. In other words, there are no changes in the encoding rules or encoding lengths but only in the interpretation of the displacement value by hardware (which needs to scale the displacement by the size of the memory operand to obtain a byte-wise address offset). Immediate field 672 operates as previously described.

### Full Opcode Field

FIG. 7B is a block diagram illustrating the fields of the specific vector friendly instruction format 700 that make up the full opcode field 674 according to one embodiment of the invention. Specifically, the full opcode field 674 includes the format field 640, the base operation field 642, and the data element width (W) field 664. The base operation field 642 includes the prefix encoding field 725, the opcode map field 715, and the real opcode field 730.

### Register Index Field

FIG. 7C is a block diagram illustrating the fields of the specific vector friendly instruction format 700 that make up the register index field 644 according to one embodiment of the invention. Specifically, the register index field 644 includes the REX field 705, the REX' field 710, the MODR/M.reg field 744, the MODR/M.r/m field 746, the VVVV field 720, xxx field 754, and the bbb field 756.

### Augmentation Operation Field

FIG. 7D is a block diagram illustrating the fields of the specific vector friendly instruction format 700 that make up the augmentation operation field 650 according to one embodiment of the invention. When the class (U) field 668 contains 0, it signifies EVEX.U0 (class A 668A); when it contains 1, it signifies EVEX.U1 (class B 668B). When U=0 and the MOD field 742 contains 11 (signifying a no memory access operation), the alpha field 652 (EVEX byte 3, bit [7] - EH) is interpreted as the rs field 652A. When the rs field 652A contains a 1 (round 652A.1), the beta field 654 (EVEX byte 3, bits [6:4]- SSS) is interpreted as the round control field 654A. The round control field 654A includes a one bit SAE field 656 and a two bit round operation field 658. When the rs field 652A contains a 0 (data transform 652A.2), the beta field 654 (EVEX byte 3, bits [6:4]- SSS) is interpreted as a three bit data transform field 654B. When U=0 and the MOD field 742 contains 00, 01, or 10 (signifying a memory access operation), the alpha field 652 (EVEX byte 3, bit [7] - EH) is interpreted as the eviction hint (EH) field 652B and the beta field 654 (EVEX byte 3, bits [6:4]- SSS) is interpreted as a three bit data manipulation field 654C.

When U=1, the alpha field 652 (EVEX byte 3, bit [7] - EH) is interpreted as the write mask control (Z) field 652C. When U=1 and the MOD field 742 contains 11 (signifying a no memory access operation), part of the beta field 654 (EVEX byte 3, bit [4]- S0) is interpreted as the RL field 657A; when it contains a 1 (round 657A. 1) the rest of the beta field 654 (EVEX byte 3, bit [6-5]- S2-1) is interpreted as the round operation field 659A, while when the RL field 657A contains a 0 (VSIZE 657.A2) the rest of the beta field 654 (EVEX byte 3, bit [6-5]- S2-1) is interpreted as the vector length field 659B (EVEX byte 3, bit [6-5]- L1-0). When U=1 and the MOD field 742 contains 00, 01, or 10 (signifying a memory access operation), the beta field 654 (EVEX byte 3, bits [6:4]- SSS) is interpreted as the vector length field 659B (EVEX byte 3, bit [6-5]- L1-0) and the broadcast field 657B (EVEX byte 3, bit [4]- B).

### Exemplary Register Architecture

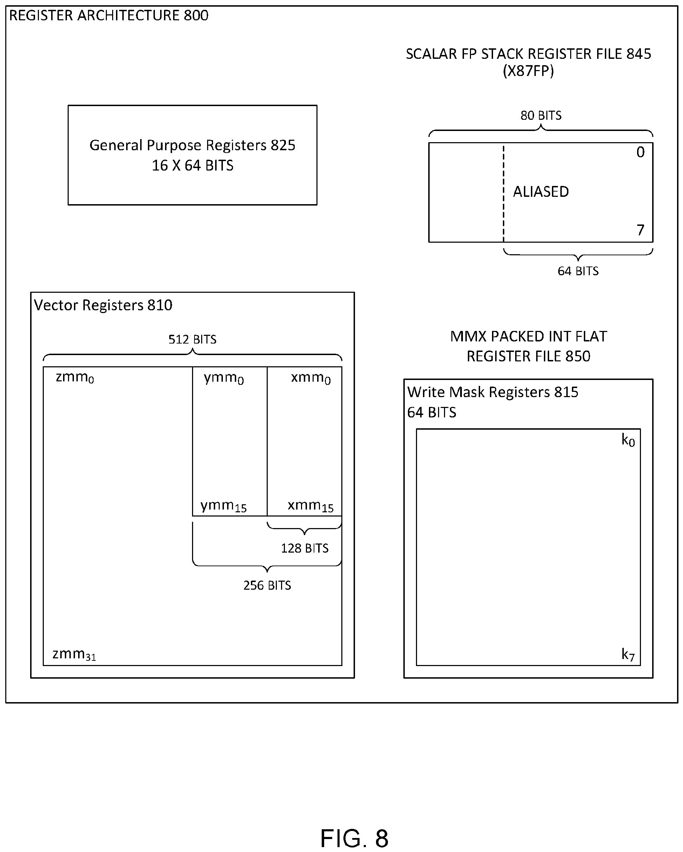

FIG. 8 is a block diagram of a register architecture 800 according to one embodiment of the invention. In the embodiment illustrated, there are 32 vector registers 810 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 700 operates on these overlaid register file as illustrated in the below tables.

| Adjustable Vector Length | Class | Operations | Registers |
|---|---|---|---|
| Instruction Templates that do not include the vector length field 659B | A (FIG. 6A; U=0) | 610, 615, 625, 630 | zmm registers (the vector length is 64 byte) |
| | B (FIG. 6B; U=1) | 612 | zmm registers (the vector length is 64 byte) |
| Instruction templates that do include the vector length field 659B | B (FIG. 6B; U=1) | 617, 627 | zmm, ymm, or xmm registers (the vector length is 64 byte, 32 byte, or 16 byte) depending on the vector length field 659B |

In other words, the vector length field 659B selects between a maximum length and one or more other shorter lengths, where each such shorter length is half the length of the preceding length; and instructions templates without the vector length field 659B operate on the maximum vector length. Further, in one embodiment, the class B instruction templates of the specific vector friendly instruction format 700 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 815 - in the embodiment illustrated, there are 8 write mask registers (k0 through k7), each 64 bits in size. In an alternate embodiment, the write mask registers 815 are 16 bits in size. As previously described, in one embodiment of the invention, the vector mask register k0 cannot be used as a write mask; when the encoding that would normally indicate k0 is used for a write mask, it selects a hardwired write mask of 0xFFFF, effectively disabling write masking for that instruction.

General-purpose registers 825 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 845, on which is aliased the MMX packed integer flat register file 850 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

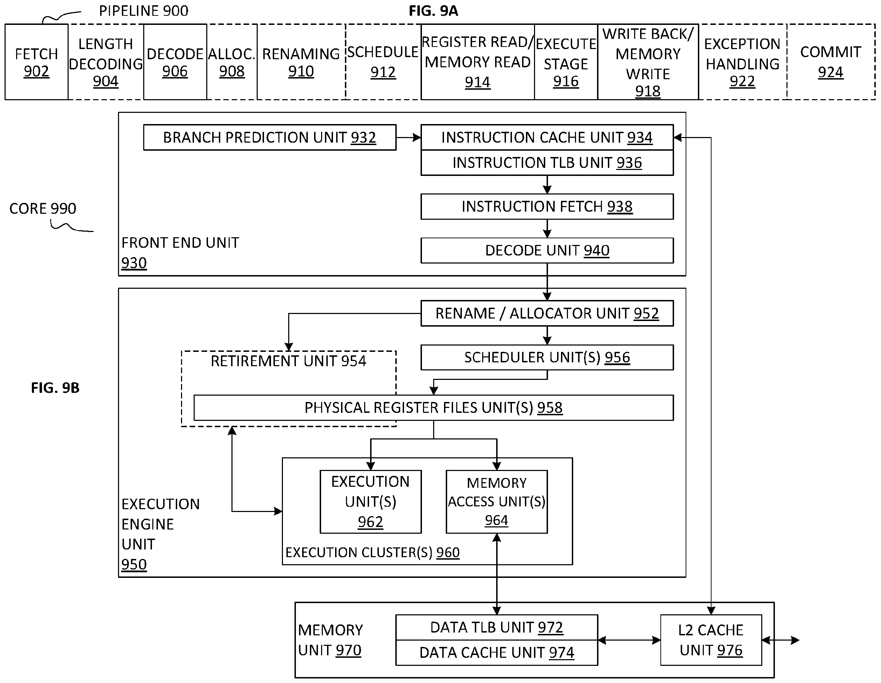

FIG. 9A is a block diagram illustrating both an exemplary in-order pipeline and an exemplary register renaming, out-of-order issue/execution pipeline according to embodiments of the invention. FIG. 9B is a block diagram illustrating both an exemplary embodiment of an in-order architecture core and an exemplary register renaming, out-of-order issue/execution architecture core to be included in a processor according to embodiments of the invention. The solid lined boxes in FIGs. 9A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 9A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 9B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

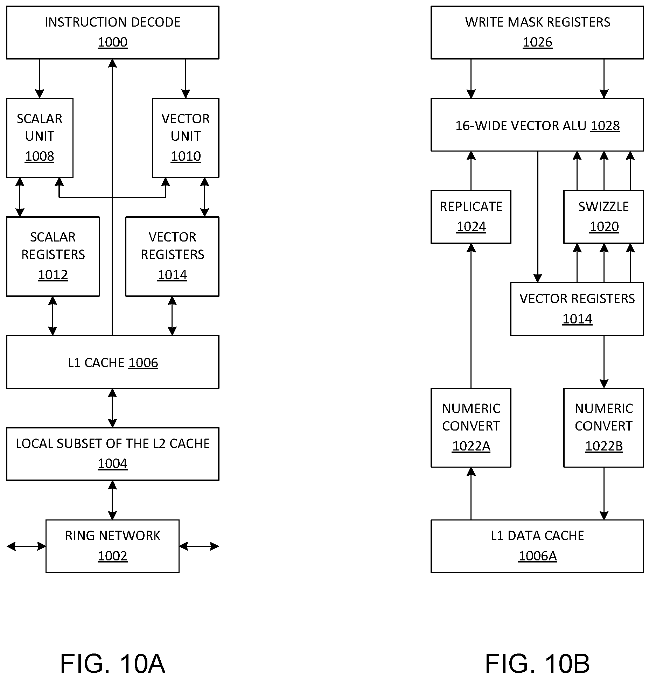

FIGs. 10A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 10A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 10B is an expanded view of part of the processor core in FIG. 10A according to embodiments of the invention. FIG. 10B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

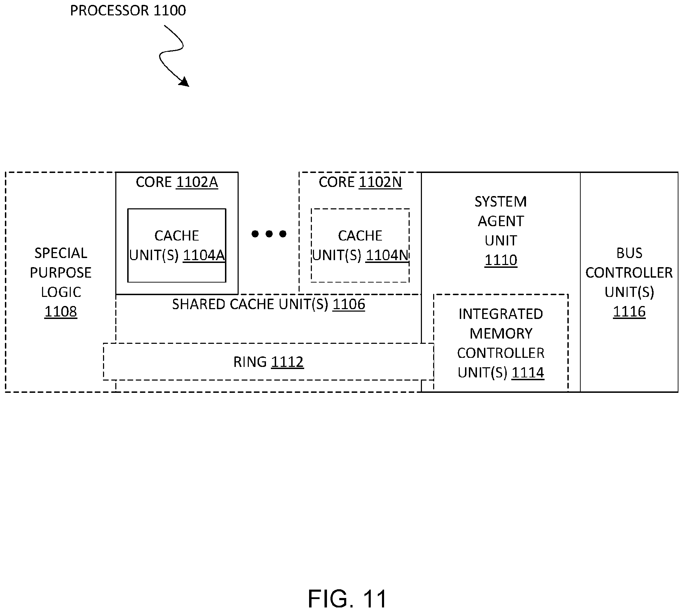

FIG. 11 is a block diagram of a processor 1100 that may have more than one core, may have an integrated memory controller, and may have integrated graphics according to embodiments of the invention. The solid lined boxes in FIG. 11 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes respective one or more levels of caches 1104A-N within cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the special purpose logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the special purpose logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

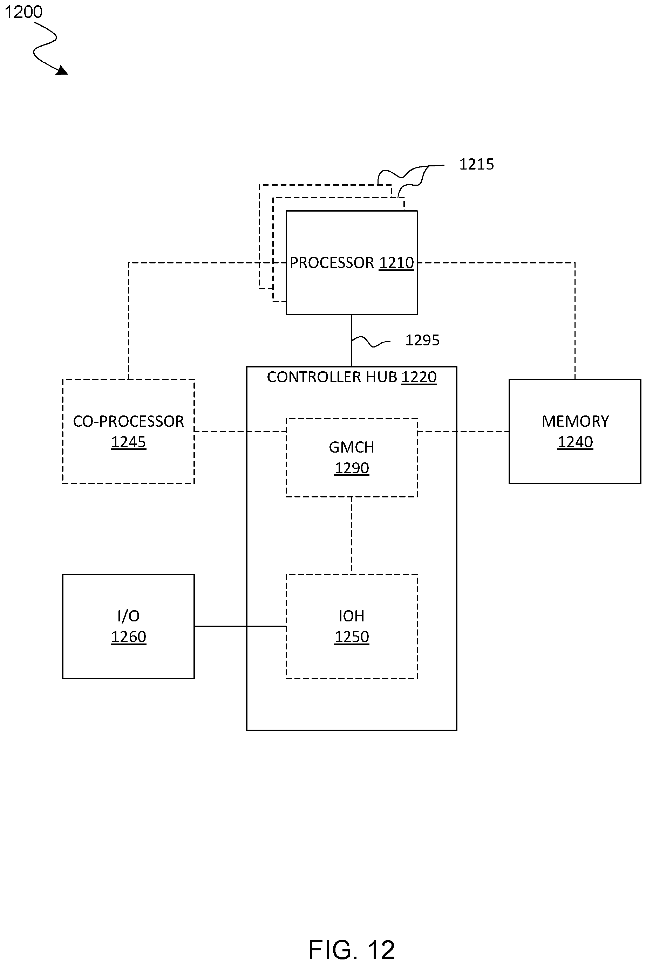

FIGs. 12 through 15 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 12, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 12 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the processors 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

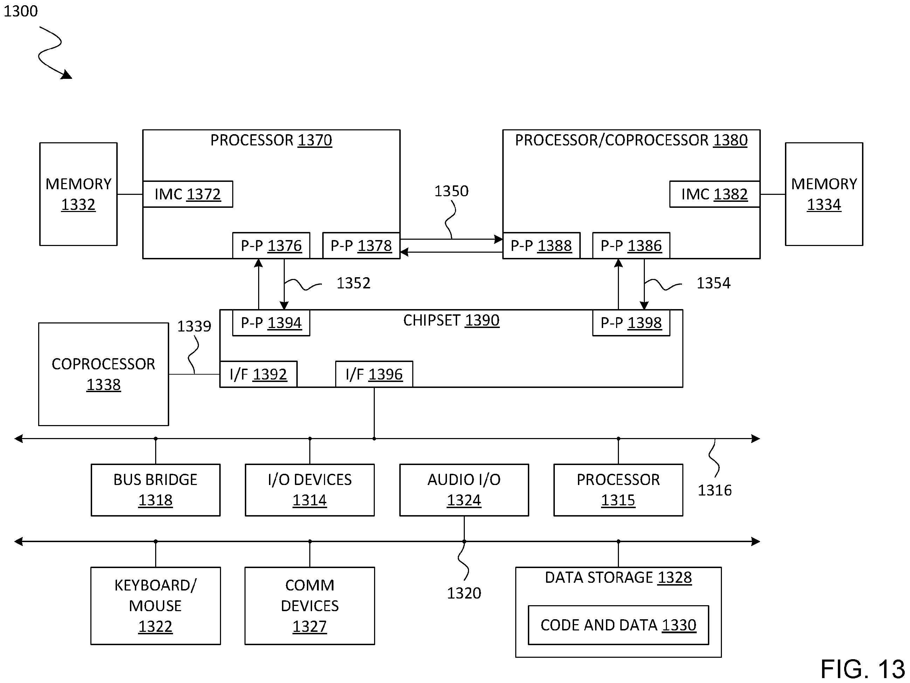

Referring now to FIG. 13, shown is a block diagram of a first more specific exemplary system 1300 in accordance with an embodiment of the present invention. As shown in FIG. 13, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller unit's point-to-point (P-P) interfaces 1376 and 1378; similarly, second processor 1380 includes P-P interfaces 1386 and 1388. Processors 1370, 1380 may exchange information via a point-to-point (P-P) interconnect 1350 using P-P interface circuits 1378, 1388. As shown in FIG. 13, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1392 and an interconnect 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in FIG. 13, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 13, a system may implement a multi-drop bus or other such architecture.

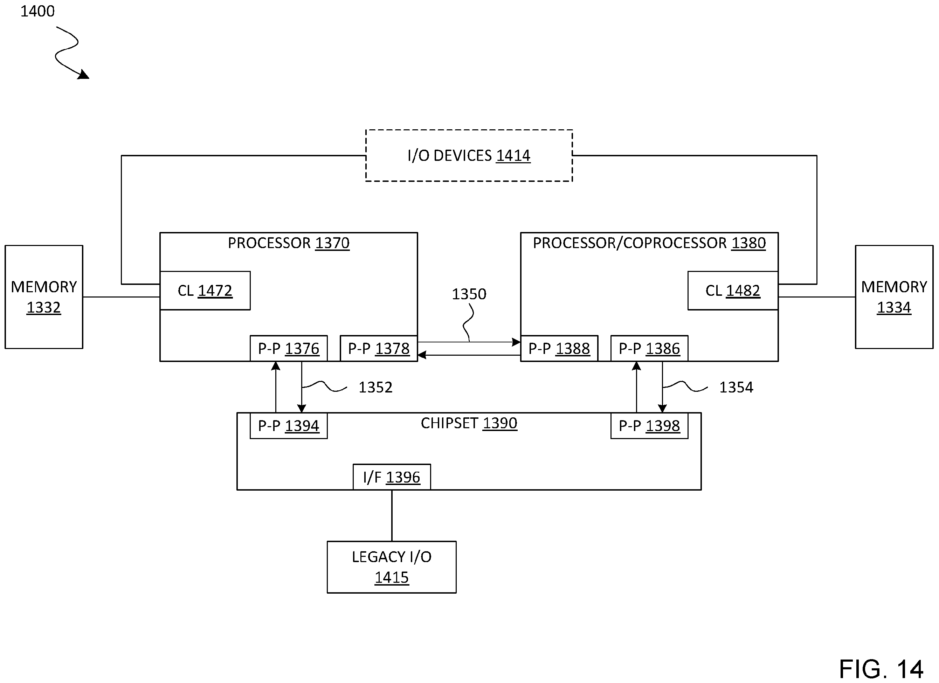

Referring now to FIG. 14, shown is a block diagram of a second more specific exemplary system 1400 in accordance with an embodiment of the present invention. Like elements in FIGs. 13 and 14 bear like reference numerals, and certain aspects of FIG. 13 have been omitted from FIG. 14 in order to avoid obscuring other aspects of FIG. 14.

FIG. 14 illustrates that the processors 1370, 1380 may include integrated memory and I/O control logic ("CL") 1472 and 1482, respectively. Thus, the CL 1472, 1482 include integrated memory controller units and include I/O control logic. FIG. 14 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

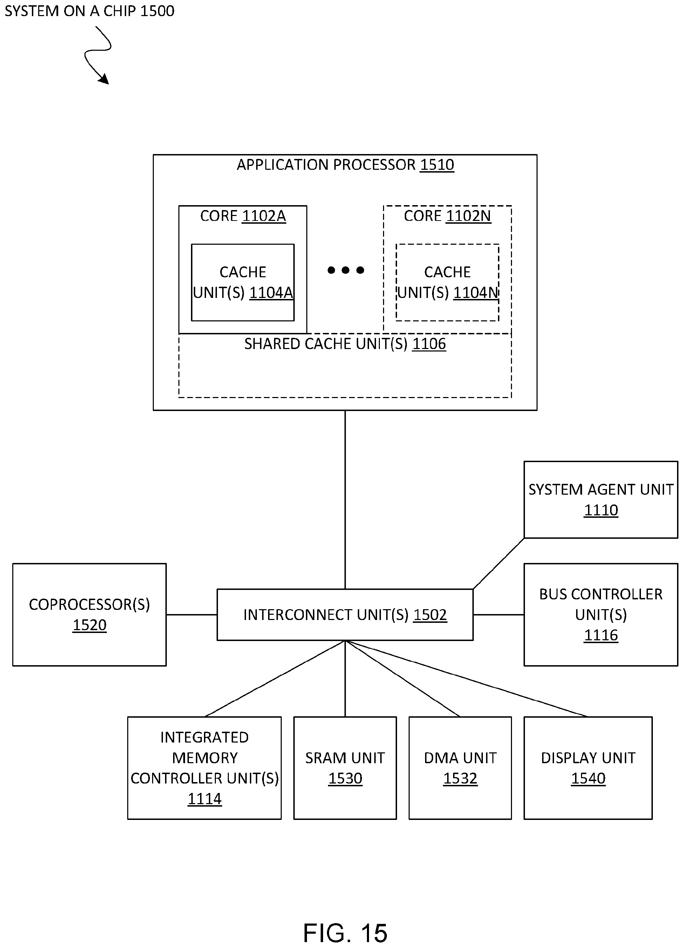

Referring now to FIG. 15, shown is a block diagram of a SoC 1500 in accordance with an embodiment of the present invention. Similar elements in FIG. 11 bear like reference numerals. Also, dashed lined boxes are optional features on more advanced SoCs. In FIG. 15, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 13, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

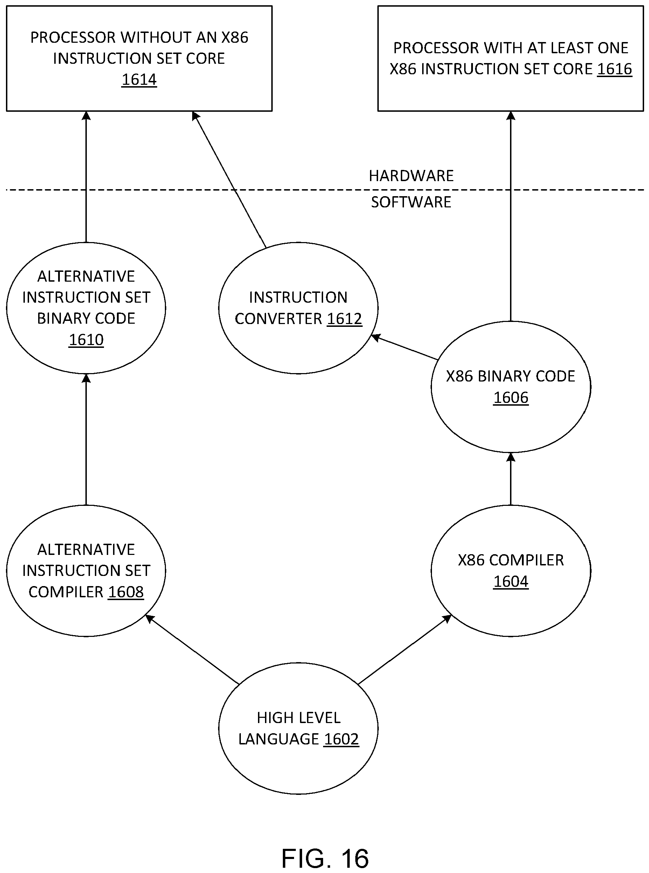

FIG. 16 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 16 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 16 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for providing value prediction information with a processor are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

In one or more first embodiments, a processor comprises a fetch unit comprising circuitry to fetch an instruction to be executed with the processor, a value prediction unit to provide a first value as a prediction of a second value, and a decoder unit coupled to receive the instruction from the fetch unit, the decoder unit comprising circuitry to decode the instruction to determine a sequence of micro-operations comprising a LoadCheck micro-operation to perform a load of the second value to a first register, and to check a validity condition of the prediction based on a completion of the load, and a Move micro-operation to move the first value to the first register, wherein the Move micro-operation is to be a next micro-operation of the sequence after the LoadCheck micro-operation.

In one or more second embodiments, further to the first embodiment, the processor further comprises an execution unit to perform an execution of the Move micro-operation, wherein based on the execution, the first value is available at the first register prior to a completion of the load.

In one or more third embodiments, further to the second embodiment or the third embodiment, the decoder unit to decode the instruction to determine the sequence of micro-operations comprises the decoder unit to perform a selection between a provisioning of a Load micro-operation, and a provisioning of a combination of the LoadCheck micro-operation and the Move micro-operation.

In one or more fourth embodiments, further to the third embodiment, the decoder unit is to perform the selection based on a determination that the first value is available.

In one or more fifth embodiments, further to the fourth embodiment, the decoder unit is to perform the selection further based on a determination that a confidence metric which corresponds to the first value satisfies a threshold criteria.

In one or more sixth embodiments, further to any of the first through third embodiments, the decoder unit to decode the instruction to determine the sequence of micro-operations comprises the decoder unit to access a cache of pre-decoded micro-operations to determine a pre-decoded version of the Move micro-operation.

In one or more seventh embodiments, further to the sixth embodiment, the decoder unit to decode the instruction to determine the sequence of micro-operations further comprises the decoder unit to combine the first value, an identifier of the first register, and the pre-decoded version of the Move micro-operation to determine the Move micro-operation.

In one or more eighth embodiments, further to any of the first through third embodiments, the processor further comprises a prediction evaluator to perform an evaluation to determine whether the first value is equal to the second value, and selectively flush an execution state of the processor based on the evaluation.

In one or more ninth embodiments, further to any of the first through third embodiments, the value prediction unit is to generate the first value according to one of a last value prediction algorithm, a stride prediction algorithm, or a context prediction algorithm.

In one or more tenth embodiments, further to any of the first through third embodiments, the decoder unit to decode the instruction to determine the sequence of micro-operations comprises the decoder unit to identify a Load micro-operation based on the instruction, and transform the Load micro-operation into a combination of the LoadCheck micro-operation and the Move micro-operation.

In one or more eleventh embodiments, a method at a processor comprises fetching an instruction to be executed with the processor, providing a first value as a prediction of a second value, and decoding the instruction, comprising determining a sequence of micro-operations comprising a LoadCheck micro-operation to perform a load of the second value to a first register, and to check a validity condition of the prediction based on a completion of the load, and a Move micro-operation to move the first value to the first register, wherein the Move micro-operation is a next micro-operation of the sequence after the LoadCheck micro-operation.

In one or more twelfth embodiments, further to the eleventh embodiment, the method further comprises performing an execution of the Move micro-operation, wherein based on the execution, the first value is available at the first register prior to a completion of the load.

In one or more thirteenth embodiments, further to the eleventh embodiment or the twelfth embodiment, decoding the instruction comprises performing a selection between a provisioning of a Load micro-operation, and a provisioning of a combination of the LoadCheck micro-operation and the Move micro-operation.

In one or more fourteenth embodiments, further to the thirteenth embodiment, the selection is performed based on a determination that the first value is available.

In one or more fifteenth embodiments, further to the fourteenth embodiment, the selection is performed further based on a determination that a confidence metric which corresponds to the first value satisfies a threshold criteria.

In one or more sixteenth embodiments, further to any of the eleventh through thirteenth embodiments, decoding the instruction comprises accessing a cache of pre-decoded micro-operations to determine a pre-decoded version of the Move micro-operation.

In one or more seventeenth embodiments, further to the sixteenth embodiment, decoding the instruction further comprises combining the first value, an identifier of the first register, and the pre-decoded version of the Move micro-operation to determine the Move micro-operation.

In one or more eighteenth embodiments, further to any of the eleventh through thirteenth embodiments, the method further comprises performing an evaluation to determine whether the first value is equal to the second value, and selectively flushing an execution state of the processor based on the evaluation.

In one or more nineteenth embodiments, further to any of the eleventh through thirteenth embodiments, the first value is generated according to one of a last value prediction algorithm, a stride prediction algorithm, or a context prediction algorithm.

In one or more twentieth embodiments, further to any of the eleventh through thirteenth embodiments, decoding the instruction comprises identifying a Load micro-operation based on the instruction, and transforming the Load micro-operation into a combination of the LoadCheck micro-operation and the Move micro-operation.

In one or more twenty-first embodiments, one or more non-transitory computer-readable storage media have stored thereon instructions which, when executed by one or more processing units, cause the one or more processing units to perform a method comprising fetching an instruction to be executed with one of the one or more processing units, providing a first value as a prediction of a second value, decoding the instruction, comprising determining a sequence of micro-operations comprising a LoadCheck micro-operation to perform a load of the second value to a first register, and to check a validity condition of the prediction based on a completion of the load, and a Move micro-operation to move the first value to the first register, wherein the Move micro-operation is a next micro-operation of the sequence after the LoadCheck micro-operation.

In one or more twenty-second embodiments, further to the twenty-first embodiment, the method further comprises performing an execution of the Move micro-operation, wherein based on the execution, the first value is available at the first register prior to a completion of the load.

In one or more twenty-third embodiments, further to the twenty-first embodiment or the twenty-second embodiment, decoding the instruction comprises performing a selection between a provisioning of a Load micro-operation, and a provisioning of a combination of the LoadCheck micro-operation and the Move micro-operation.

In one or more twenty-fourth embodiments, further to the twenty-third embodiment, the selection is performed based on a determination that the first value is available.

In one or more twenty-fifth embodiments, further to the twenty-fourth embodiment, the selection is performed further based on a determination that a confidence metric which corresponds to the first value satisfies a threshold criteria.

In one or more twenty-sixth embodiments, further to any of the twenty-first through twenty-third embodiments, decoding the instruction comprises accessing a cache of pre-decoded micro-operations to determine a pre-decoded version of the Move micro-operation.

In one or more twenty-seventh embodiments, further to the twenty-sixth embodiment, decoding the instruction further comprises combining the first value, an identifier of the first register, and the pre-decoded version of the Move micro-operation to determine the Move micro-operation.

In one or more twenty-eighth embodiments, further to any of the twenty-first through twenty-third embodiments, the method further comprises performing an evaluation to determine whether the first value is equal to the second value, and selectively flushing an execution state of the processor based on the evaluation.

In one or more twenty-ninth embodiments, further to any of the twenty-first through twenty-third embodiments, the first value is generated according to one of a last value prediction algorithm, a stride prediction algorithm, or a context prediction algorithm.

In one or more thirtieth embodiments, further to any of the twenty-first through twenty-third embodiments, decoding the instruction comprises identifying a Load micro-operation based on the instruction, and transforming the Load micro-operation into a combination of the LoadCheck micro-operation and the Move micro-operation.

In one or more thirty-first embodiments, a device comprises first circuitry to detect that an execution of an instruction by a processor is to include a load of a first value to a first register, second circuitry to identify an ability of the processor to provide a second value as a prediction of the first value, and third circuitry coupled to the first circuitry and the second circuitry, wherein, based on the instruction and the ability, the third circuitry is to generate information which represents a sequence of micro-operations comprising a LoadCheck micro-operation to perform the load of the second value to a first register, and to check a validity condition of the prediction based on a completion of the load, and a Move micro-operation to move the first value to the first register, wherein the Move micro-operation is to be a next micro-operation of the sequence after the LoadCheck micro-operation.

In one or more thirty-second embodiments, further to the thirty-first embodiment, the third circuitry is to generate the information comprises the third circuitry is to at least partially decode the instruction.

In one or more thirty-third embodiments, further to the thirty-first embodiment or the thirty-second embodiment, the third circuitry to generate the information comprises the third circuitry to determine an instruction type which corresponds to the instruction, and provide data which identifies an association of the instruction type with the sequence.

In one or more thirty-fourth embodiments, a method comprises detecting that an execution of an instruction by a processor is to include a load of a first value to a first register, identifying an ability of the processor to provide a second value as a prediction of the first value based on the instruction and the ability, generating information representing a sequence of micro-operations comprising a LoadCheck micro-operation to perform the load of the second value to a first register, and to check a validity condition of the prediction based on a completion of the load, and a Move micro-operation to move the first value to the first register, wherein the Move micro-operation is to be a next micro-operation of the sequence after the LoadCheck micro-operation.

In one or more thirty-fifth embodiments, further to the thirty-fourth embodiment, generating the information comprises at least partially decoding the instruction.

In one or more thirty-sixth embodiments, further to the thirty-fourth embodiment or the thirty-fifth embodiment, generating the information comprises determining an instruction type which corresponds to the instruction, and providing data which identifies an association of the instruction type with the sequence.

In one or more thirty-seventh embodiments, one or more non-transitory computer-readable storage media have stored thereon instructions which, when executed by one or more processing units, cause the one or more processing units to perform a method comprising detecting that an execution of an instruction by a processor is to include a load of a first value to a first register, identifying an ability of the processor to provide a second value as a prediction of the first value based on the instruction and the ability, generating information representing a sequence of micro-operations comprising a LoadCheck micro-operation to perform the load of the second value to a first register, and to check a validity condition of the prediction based on a completion of the load, and a Move micro-operation to move the first value to the first register, wherein the Move micro-operation is to be a next micro-operation of the sequence after the LoadCheck micro-operation.

In one or more thirty-eighth embodiments, further to the thirty-seventh embodiment, generating the information comprises at least partially decoding the instruction.

In one or more thirty-ninth embodiments, further to the thirty-seventh embodiment or the thirty-eighth embodiment, generating the information comprises determining an instruction type which corresponds to the instruction, and providing data which identifies an association of the instruction type with the sequence.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A processor comprising:
a fetch unit comprising circuitry to fetch an instruction to be executed with the processor;
a value prediction unit to provide a first value as a prediction of a second value; and
a decoder unit coupled to receive the instruction from the fetch unit, the decoder unit comprising circuitry to decode the instruction to determine a sequence of micro-operations comprising:
a LoadCheck micro-operation to perform a load of the second value to a first register, and to check a validity condition of the prediction based on a completion of the load; and
a Move micro-operation to move the first value to the first register;
wherein the Move micro-operation is to be a next micro-operation of the sequence after the LoadCheck micro-operation.

2. The processor of claim 1, further comprising an execution unit to perform an execution of the Move micro-operation, wherein based on the execution, the first value is available at the first register prior to a completion of the load.

3. The processor of either of claim 1 or claim 2, wherein the decoder unit to decode the instruction to determine the sequence of micro-operations comprises the decoder unit to perform a selection between:
a provisioning of a Load micro-operation; and
a provisioning of a combination of the LoadCheck micro-operation and the Move micro-operation.

4. The processor of claim 3, wherein the decoder unit is to perform the selection based on a determination that the first value is available.

5. The processor of claim 4, wherein the decoder unit is to perform the selection further based on a determination that a confidence metric which corresponds to the first value satisfies a threshold criteria.

6. The processor of either of claim 1 or claim 2, wherein the decoder unit to decode the instruction to determine the sequence of micro-operations comprises the decoder unit to access a cache of pre-decoded micro-operations to determine a pre-decoded version of the Move micro-operation.

7. The processor of claim 6, wherein the decoder unit to decode the instruction to determine the sequence of micro-operations further comprises the decoder unit to combine the first value, an identifier of the first register, and the pre-decoded version of the Move micro-operation to determine the Move micro-operation.

8. The processor of either of claim 1 or claim 2, further comprising a prediction evaluator to:
perform an evaluation to determine whether the first value is equal to the second value; and
selectively flush an execution state of the processor based on the evaluation.

9. The processor of either of claim 1 or claim 2, wherein the value prediction unit is to generate the first value according to one of a last value prediction algorithm, a stride prediction algorithm, or a context prediction algorithm.

10. The processor of either of claim 1 or claim 2, wherein the decoder unit to decode the instruction to determine the sequence of micro-operations comprises the decoder unit to:
identify a Load micro-operation based on the instruction; and
transform the Load micro-operation into a combination of the LoadCheck micro-operation and the Move micro-operation.

11. A method at a processor, the method comprising:
fetching an instruction to be executed with one of the one or more processing units;
providing a first value as a prediction of a second value; and
decoding the instruction, comprising determining a sequence of micro-operations comprising:
a LoadCheck micro-operation to perform a load of the second value to a first register, and to check a validity condition of the prediction based on a completion of the load; and
a Move micro-operation to move the first value to the first register;
wherein the Move micro-operation is a next micro-operation of the sequence after the LoadCheck micro-operation.

12. The method of claim 11, further comprising performing an execution of the Move micro-operation, wherein based on the execution, the first value is available at the first register prior to a completion of the load.

13. The method of either of claim 11 or claim 12, wherein decoding the instruction comprises performing a selection between:
a provisioning of a Load micro-operation; and
a provisioning of a combination of the LoadCheck micro-operation and the Move micro-operation.

14. The method of either of claim 11 or claim 12, wherein decoding the instruction comprises accessing a cache of pre-decoded micro-operations to determine a pre-decoded version of the Move micro-operation.

15. Machine-readable storage including machine-readable instructions, when executed, to implement a method or realize a processor as claimed in any preceding claim.
